(19) **Europäisches Patentamt / European Patent Office / Office européen des brevets**

(11) **EP 1 515 030 B1**

(12) **EUROPEAN PATENT SPECIFICATION**

(45) Date of publication and mention
of the grant of the patent:
**16.03.2011  Bulletin 2011/11**

(51) Int Cl.:
*F02D 41/02* *(2006.01)*     *F02D 41/14* *(2006.01)*

(21) Application number: **04021488.4**

(22) Date of filing: **09.09.2004**

(54) **Method and apparatus for controlling sulfur poisoning recovery of a catalyst**

Verfahren und Vorrichtung zur Regelung der Entschwefelung eines Katalysators

Procédé et dispositif de contrôle de décontamination d'un catalyseur contaminé au soufre

(84) Designated Contracting States:
**DE ES FR GB IT**

(30) Priority: **10.09.2003  JP 2003318109**

(43) Date of publication of application:
**16.03.2005  Bulletin 2005/11**

(73) Proprietor: **Toyota Jidosha Kabushiki Kaisha
Toyota-shi, Aichi-ken, 471-8571 (JP)**

(72) Inventors:
 • **Kobayashi, Nobuki
   Toyota-shi
   Aichi-ken 471-8571 (JP)**
 • **Otsubo, Yasuhiko
   Toyota-shi
   Aichi-ken 471-8571 (JP)**
 • **Tahara, Jun
   Toyota-shi
   Aichi-ken 471-8571 (JP)**

 • **Sugiyama, Tatsumasa
   Toyota-shi
   Aichi-ken 471-8571 (JP)**

(74) Representative: **Kuhnen & Wacker
Patent- und Rechtsanwaltsbüro
Prinz-Ludwig-Strasse 40A
85354 Freising (DE)**

(56) References cited:
   **EP-A- 0 892 158     EP-A- 0 893 154
   EP-A- 1 106 798     EP-A- 1 154 131
   EP-A- 1 176 298     DE-A1- 4 100 397**

 • **PATENT ABSTRACTS OF JAPAN vol. 2002, no.
   08, 5 August 2002 (2002-08-05) & JP 2002 122019
   A (TOYOTA MOTOR CORP), 26 April 2002
   (2002-04-26)**

**EP 1 515 030 B1**

**Description**

BACKGROUND OF THE INVENTION

1. Field of the Invention

The invention relates to an exhaust gas control catalyst control method and apparatus that supplies fuel from an upstream side of an exhaust system when sulfur poisoning occurs, to a plurality of exhaust gas control catalysts, which is provided from the upstream side to a downstream side in the exhaust system of an internal combustion engine and whose exhaust gas control ability is reduced by sulfur poisoning, so as to perform a process for increasing a catalyst bed temperature and a process for decreasing an air-fuel ratio, thereby performing control for recovery from sulfur poisoning (hereinafter, referred to as "sulfur poisoning recovery control").

2. Description of the Related Art

In order allow an exhaust gas control catalyst, e.g., a NOx storage reduction catalyst, provided in an exhaust system of an internal combustion engine to recover from sulfur poisoning, it is necessary to increase a catalyst bed temperature of the exhaust gas control catalyst, and decrease an air-fuel ratio to a value equal to or lower than the stoichiometric air-fuel ratio. Accordingly, fuel may be supplied from an upstream side of the exhaust gas control catalyst into exhaust gas. In this case, if it is not detected with high accuracy whether both a target decrease in the air-fuel ratio and a target increase in the catalyst bed temperature are achieved, whether a sulfur component is released cannot be determined accuratel y.

When it cannot be determined accurately whether the sulfur component is released, there is a possibility that the air-fuel ratio continues to decrease and the catalyst bed temperature continues to increase on the assumption that the exhaust gas control catalyst has not yet recovered from sulfur poisoning, is spite of the fact that the exhaust gas control catalyst has already recovered from sulfur poisoning. This may result in heat degradation of the exhaust gas control catalyst due to the increase in the catalyst bed temperature, and reduction in fuel efficiency.

An example of a technology for estimating a catalyst bed temperature with high accuracy is disclosed in Japanese Patent Laid-Open Publication No. 2002-122019 (pages 10 to 13, FIG. 4). This publication discloses a technology in which an exhaust gas temperature is detected by a temperature sensor provided upstream from an exhaust gas control catalyst, a catalyst bed temperature of the exhaust gas control catalyst positioned downstream from the temperature sensor is estimated based on the exhaust gas temperature, and a fuel supply amount in sulfur poisoning recovery control or the like is adjusted according to the catalyst bed temperature. In this technology, another temperature sensor is provided downstream from the exhaust gas control catalyst, in order to prevent the catalyst bed temperature from excessively increasing.

There is an exhaust gas control system in which an exhaust gas control catalyst, e.g., a NOx storage reduction catalyst, is provided on an upstream side of an exhaust system of an internal combustion engine, and another exhaust gas control catalyst which performs both NOx storage reduction and purification of particulate is provided on a downstream side of the exhaust system. The exhaust control catalyst on the downstream side of the exhaust gas control system performs exhaust gas control, e.g., NOx storage reduction, filters the particulate in exhaust gas using a filter, and increases a catalyst bed temperature, so as to oxidize the particulate using a catalytic function, thereby performing exhaust gas control.

With this arrangement of the exhaust gas control catalysts, when sulfur poisoning recovery control is performed, it is determined whether a catalyst bed temperature increase condition for the two exhaust gas control catalysts is satisfied based on the exhaust gas temperature detected by the temperature sensor provided between the two exhaust gas control catalysts. Accordingly, when an air-fuel ratio decrease condition based on an air-fuel ratio detected by an air-fuel ratio sensor, and the catalyst bed temperature increase condition are satisfied, a degree of recovery from sulfur poisoning is determined according to a sulfur poisoning recovery computation.

However, in the case of the two exhaust gas control catalysts one of which is provided on the upstream side of the exhaust system and the other of which is provided on the downstream side of the exhaust system, a failure, e.g., degradation and clogging, is likely to occur in the exhaust gas control catalyst on the upstream side earlier than in the exhaust gas control catalyst on the downstream side. Accordingly, a catalytic reaction is reduced or becomes non-uniform in the exhaust gas control catalyst on the upstream side during the sulfur poisoning recovery control. As a result, the exhaust gas temperature detected by the temperature sensor provided between the two exhaust gas control catalysts may not increase sufficiently.

In such a state, it is determined that the temperatures of the two exhaust gas control catalysts are not increased sufficiently, and the sulfur component is not released. Therefore, the sulfur poisoning recovery computation is not performed, and it is determined that recovery from sulfur poisoning does not proceed. Accordingly, in order to allow the exhaust gas control catalysts to recover from sulfur poisoning, the process for increasing a temperature and the process for decreasing an air-fuel ratio are continued by the sulfur poisoning recovery control.

However, a catalytic reaction actually occurs sufficiently in the exhaust gas control catalyst on the downstream side. Therefore, both the air-fuel ratio decrease condition and the catalyst bed temperature increase condition are satisfied, and the exhaust gas control catalyst on the downstream side releases the sulfur component stored due to poisoning, instead of the exhaust gas control catalyst on the upstream side. However, even when the sulfur component is being released, the sulfur poisoning recovery computation is not performed and it is determined that recovery from sulfur poisoning does not proceed, as described above. Therefore, even after the exhaust gas control catalyst on the downstream side has released the sulfur component entirely, the temperature of the exhaust gas control catalyst on the downstream is kept high due to continuation of the process for increasing the temperature. Accordingly, heat degradation of the exhaust gas control catalyst on the downstream side is promoted. Further, continuation of the process for increasing a temperature and the process for decreasing an air-fuel ratio wastes fuel, resulting in reduction of fuel efficiency.

Document EP 0 893 154 A2 discloses a device and a method for sulfur poisoning recovery. The invention refers to providing an optimal composition of exhaust gas upon poisoning recovery.

Document EP 0 892 158 A2 refers to a control method of sulfur poisoning recovery. The method refers to an optimized returning to a normal state after poisoning recovery.

Document EP 1 154 131 A2 refers to an exhaust gas purifying device. The invention is related to the timing of post fuel injection which is said as a rotational angle of crankshaft between 30 and 210° after TDC of the compression stroke.

Document DE 41 00 397 A1 discloses a method and device for controlling the degree of conversion of a catalyst. The method uses the difference in temperature upstream and downstream of the catalyst.

Document EP 1 176 298 A2 discloses an emission control system and method, the method including determination of the catalyst temperature and exhaust passage temperature according to several predetermined modes.

Document EP 1 106 798 A1 discloses a device and method for sulfur poisoning recovery of a $NO_x$ catalyst. The device comprises means for increasing the amount of a fuel provided to the internal combustion engine and/or the exhaust gas device.

SUMMARY OF THE INVENTION

It is an object of the invention to provide an exhaust gas control catalyst control and apparatus which does not promote heat degradation of an exhaust gas control catalyst on a downstream side and which does not cause reduction in fuel efficiency, even when a failure, e.g., degradation and clogging, occurs in an exhaust gas control catalyst on an upstream.

A first aspect of the invention relates to an exhaust gas control catalyst control method for an exhaust gas control catalyst which are arranged in an exhaust system of an internal combustion engine and whose exhaust control ability is reduced by sulfur poisoning, the exhaust gas control catalyst including, in a direction from an upstream side to a downstream side of the exhaust system, at least a first catalyst, a second catalyst and a third catalyst, the method performing a sulfur poisoning recovery control in which a catalyst bed increasing process and an air-fuel ratio decreasing process are performed by supplying fuel from an upstream side of the exhaust system to the exhaust gas control catalyst when sulfur poisoning occurs. In the control method, an upstream side exhaust gas temperature is detected between the first catalyst and the second catalyst which are $NO_x$ storage reduction catalysts, and a downstream side exhaust gas temperature is detected on a downstream side of the second catalyst and subsequent catalysts which are $NO_x$ storage reduction catalysts, wherein, in a state where an air-fuel ratio is decreased to a value equal to or lower than a reference air-fuel ratio by the air-fuel ratio decreasing process, when the downstream side exhaust gas temperature, which is detected at the position downstream of at least one of the second catalyst and subsequent catalysts is higher than a reference temperature for determining whether a temperature is high (hereinafter, referred to as a "high temperature determination reference temperature"), sulfur poisoning recovery computation is performed.

In the first aspect, the exhaust gas temperature detected at the position downstream from the subject exhaust gas control catalyst is not affected by a failure, e.g., degradation and clogging, in another exhaust gas control catalyst positioned upstream from the subject exhaust gas control catalyst. In addition, since the exhaust gas temperature is obtained immediately after the exhaust gas that has passed through the subject exhaust gas control catalyst, the detected exhaust gas temperature reflects the catalyst bed temperature of the subject exhaust gas control catalyst with high accuracy. Therefore, in the state where the air-fuel ratio is decreased to a value equal to or lower than the reference air-fuel ratio by the air-fuel ratio decreasing process, when an exhaust gas temperature, which is detected at a position downstream from at least one of the second exhaust gas control catalyst and subsequent catalysts in the direction from the upstream side to the downstream side, is higher than the high temperature determination reference temperature, it can be determined that the catalyst bed temperature of the exhaust gas control catalyst, that is positioned upstream from the position at which the exhaust gas temperature is detected, has reached a value at which the sulfur component can be released. Accordingly, it can be determined that the sulfur component is released at a low air-fuel ratio.

According to the first aspect, in the state where the air-fuel ratio is decreased to a value equal to or lower than the reference air-fuel ratio by the air-fuel ratio decreasing process, when an exhaust gas temperature, which is detected at a position downstream from at least one of the second exhaust gas control catalyst and subsequent catalysts in a direction from the upstream side to the downstream side, is higher than the high temperature determination reference temperature, the degree of recovery from sulfur poisoning can be obtained with high accuracy, by performing the sulfur poisoning recovery computation. Accordingly, the catalyst bed temperature increasing process and the air-fuel ratio decreasing process can be appropriately performed by the sulfur poisoning recovery control. As a result, heat degradation of the exhaust gas control catalyst on the downstream side is not promoted and reduction in fuel efficiency is not caused, even when a failure, e.g., degradation and clogging, occurs in the exhaust gas control catalyst on the upstream side.

In the exhaust gas control catalyst control method according to the first aspect of the invention, the reference air-fuel ratio may be set to a value equal to or lower than the stoichiometric air-fuel ratio.

In the exhaust gas control catalyst control method according to the first aspect and the aspect related to the first aspect of the invention, the high temperature determination reference temperature may be set to a value at which sulfur can be released from at least one of the second exhaust gas control catalyst and subsequent catalysts in a direction from the upstream side to the downstream side.

A second aspect of the invention relates to an exhaust gas control catalyst control apparatus for an exhaust gas control catalyst which are arranged in an exhaust system of an internal combustion engine and whose exhaust control ability is reduced by sulfur poisoning, the exhaust gas control catalyst including, in a direction from an upstream side to a downstream side of the exhaust system, at least a first catalyst, a second catalyst and a third catalyst. The apparatus performing a sulfur poisoning recovery control in which a catalyst bed temperature increasing process and an air-fuel ratio decreasing process are performed by supplying fuel from an upstream side of the exhaust system to the exhaust gas control catalyst when sulfur poisoning occurs. The control apparatus includes a first exhaust gas temperature sensor that detects an upstream side exhaust gas temperature at a position between the first catalyst and the second catalyst, which are $NO_x$ storage reduction catalysts, and a second exhaust gas temperature sensor that detects a downstream side exhaust gas temperature at a position downstream of the second exhaust gas control catalyst and subsequent catalysts which are $NO_x$ storage reduction catalysts; air-fuel ratio detecting means for detecting an exhaust gas air-fuel ratio at a position downstream from the position at which the fuel supply is performed; and sulfur poisoning recovery computing means for performing sulfur poisoning recovery computation, when the downstream side exhaust gas temperature, which is detected by the exhaust gas temperature sensor, is higher than a high temperature determination reference temperature, in a state where the air-fuel ratio detecting means has detected that the air-fuel ratio is decreased to a value equal to or lower than a reference air-fuel ratio.

In the second aspect, an exhaust gas temperature detected by the exhaust gas temperature sensor at a position downstream from one of the second exhaust gas control catalyst and subsequent catalysts in the direction from the upstream side to the downstream side is not affected by a failure, e.g., degradation and clogging, in another exhaust gas control catalyst positioned upstream from the subject exhaust gas control catalyst. In addition, since the exhaust gas temperature detected immediately after the exhaust gas has passed through the subject exhaust gas control catalyst, which is one of the second exhaust gas control catalyst and subsequent catalysts in a direction from the upstream side to the downstream side, the detected exhaust gas temperature reflects the catalyst bed temperature of the subject exhaust gas control catalyst with high accuracy. Therefore, in the state where the air-fuel ratio detecting means has detected the fact that the air-fuel ratio is decreased to a value equal to or lower than the reference air-fuel ratio, when an exhaust gas temperature detected by the exhaust gas temperature sensor is higher than the high temperature determination reference temperature, it can be determined that the catalyst bed temperature of the second exhaust gas control catalyst and subsequent catalysts in the direction from the upstream side to the downstream side, has reached the value at which the sulfur component can be released. Accordingly, the sulfur poisoning recovery computing means can determine that, at a low air-fuel ratio, the sulfur component is released from the second exhaust gas control catalyst and subsequent catalysts in the direction from the upstream side to the downstream side.

According to the second aspect, in the state where the air-fuel ratio detecting means has detected the fact that the air-fuel ratio is decreased to a value equal to or lower than the reference air-fuel ratio, when the exhaust gas temperature detected by the exhaust gas temperature sensor is higher than the high temperature determination reference temperature, the sulfur poisoning recovery computing means can obtain a degree of recovery from sulfur poisoning with high accuracy by performing sulfur poisoning recovery computation. Accordingly, the catalyst bed temperature increasing process and the air-fuel ratio decreasing process can be appropriately performed by the sulfur poisoning recovery control. As a result, heat degradation of the exhaust gas control catalyst on the downstream side is not promoted and reduction in fuel efficiency is not caused, even when a failure, e.g., degradation and clogging, occurs in the exhaust gas control catalyst on the upstream side.

In the exhaust gas control catalyst control apparatus according to the second aspect of the invention, the reference air-fuel ratio may be set to a value equal to or lower than the stoichiometric air-fuel ratio.

In the exhaust gas control catalyst control apparatus according to the second aspect and the aspect related to the second aspect of the invention, the high temperature determination reference temperature may be set to a value at which sulfur can be released from at least one of the second exhaust gas control catalyst and subsequent catalysts in a direction from the upstream side to the downstream side.

In the exhaust gas control catalyst control apparatus according to the second aspect and the aspect related to the second aspect of the invention, the sulfur poisoning recovery computing means may perform sulfur poisoning recovery computation, when at least one of a condition that the exhaust gas temperature, which is detected by the first exhaust gas temperature sensor, is higher than the high temperature determination reference temperature and a condition that the exhaust gas temperature, which is detected by the second exhaust gas temperature sensor, is higher than the high temperature determination reference temperature is satisfied, in a state where the air-fuel ratio detecting means has detected that the air-fuel ratio is decreased to the value equal to or lower than the reference air-fuel ratio.

In the exhaust gas control catalyst control apparatus according to the second aspect and the aspect related to the second aspect of the invention, when the first exhaust gas temperature sensor and the second exhaust gas temperature sensor are provided, the exhaust gas temperature detected by the first exhaust gas temperature sensor accurately reflects the catalyst bed temperature of the exhaust gas control catalyst on the upstream side. Also, the exhaust gas temperature detected by the second exhaust gas temperature sensor accurately reflects the catalyst bed temperature of the exhaust gas control catalyst on the downstream side.

According to the related aspect, when the exhaust gas temperature detected by the first exhaust gas temperature sensor is higher than the high temperature determination reference temperature, it can be determined that the catalyst bed temperature of the exhaust gas control catalyst on the upstream side has reached the value at which the sulfur component can be released. Based on this, it can be determined that the catalyst bed temperature of the exhaust gas control catalyst on the downstream side has already reached a value at which the sulfur component can be released, or will immediately increase to the value at which the sulfur component can be released.

When the exhaust gas temperature detected by the second exhaust gas temperature sensor is higher than the high temperature determination reference temperature, it can be determined that at least the catalyst bed temperature of exhaust gas control catalyst on the downstream side has reached the value at which the sulfur component can be released.

Therefore, the sulfur poisoning recovery computing means performs sulfur poisoning recovery computation, when at least one of the condition that an exhaust gas temperature, which is detected by the first exhaust gas temperature sensor, is higher than the high temperature determination reference temperature and the condition that an exhaust gas temperature, which is detected by the second exhaust gas temperature sensor, is higher than the high temperature determination reference temperature is satisfied. Thus, a degree of recovery from sulfur poisoning can be obtained with high accuracy. Accordingly, the catalyst bed temperature increasing process and the air-fuel ratio decreasing process can be appropriately performed by the sulfur poisoning recovery control. As a result, heat degradation of the exhaust gas control catalyst on the downstream side is not promoted and reduction in fuel efficiency is not caused, even when a failure, e.g., degradation and clogging, occurs in the exhaust gas control catalyst on the upstream side.

In the exhaust gas control catalyst control apparatus according to the second aspect and the aspect related to the second aspect of the invention, the sulfur poisoning recovery computing means may perform sulfur poisoning recovery computation if the exhaust gas temperature which is detected by the first exhaust gas temperature sensor is higher than the high temperature determination reference temperature in the state where the air-fuel ratio detecting means has detected the fact that the air-fuel ratio is decreased to the value equal to

or lower than the reference air-fuel ratio when no failure has occurred in the exhaust gas control catalyst, and may perform sulfur poisoning recovery computation if the exhaust gas temperature which is detected by the second exhaust gas temperature sensor is higher than the high temperature determination reference temperature in the state where the air-fuel ratio detecting means has detected the fact that the air-fuel ratio is decreased to the value equal to or lower than the reference air-fuel ratio when a failure has occurred in the first catalyst.

In the exhaust gas control catalyst control apparatus according to the second aspect and the aspect related to the second aspect of the invention, the sulfur poisoning recovery computing means performs sulfur poisoning recovery computation, if an exhaust gas temperature which is detected by the first exhaust gas temperature sensor is higher than the high temperature determination reference temperature in the state where the air-fuel ratio detecting means has detected the fact that the air-fuel ratio is decreased to a value equal to or lower than the reference air-fuel ratio when no failure has occurred in the exhaust gas control catalyst on the upstream side. When the exhaust gas temperature detected by the first exhaust gas temperature sensor is higher than the high temperature determination reference temperature, it can be determined that the catalyst bed temperature of the exhaust gas control catalyst on the upstream side has reached the value at which the sulfur component can be released. Also, it can be determined that the catalyst bed temperature of the exhaust gas control catalyst on the downstream side has already reached the value at which the sulfur component can be released, or will immediately increase to the value at which the sulfur component can be released. Thus, the degree of recovery from sulfur poisoning can be obtained with high accuracy. Accordingly, the catalyst bed temperature increasing process and the air-fuel ratio decreasing process can be appropriately performed by the sulfur poisoning recovery control.

Also, the sulfur poisoning recovery computing means performs sulfur poisoning recovery computation, if an exhaust gas temperature which is detected by the second exhaust gas temperature sensor is higher than the high temperature determination reference temperature in the state where the air-fuel ratio detecting means has detected the fact that the air-fuel ratio is decreased to a value equal to or lower than a reference air-fuel ratio when a failure has occurred in the exhaust gas control catalyst on the upstream side. When the exhaust gas temperature detected by the second exhaust gas temperature sensor is higher than the high temperature determination reference temperature, it can be determined that the catalyst bed temperature of the exhaust gas control catalyst on the downstream side has reached the value at which the sulfur component can be released. Thus, the degree of recovery from sulfur poisoning can be obtained with high accuracy. Accordingly, the catalyst bed temperature increasing process and the air-fuel ratio decreasing process can be appropriately performed by the sulfur poisoning recovery control.

According to the second aspect and the aspect related to the second aspect, heat degradation of the exhaust gas control catalyst on the downstream side is not promoted and reduction in fuel efficiency is not caused, even when a failure, e.g., degradation and clogging, occurs in the exhaust gas control catalyst on the upstream side.

In the exhaust gas control catalyst control apparatus according to the second aspect and the aspect related to the second aspect of the invention, the sulfur poisoning recovery computing means may determine that a failure has occurred in the exhaust gas control catalyst, when the exhaust gas temperature detected by the first exhaust gas temperature sensor continues to be lower than the high temperature determination reference temperature during the sulfur poisoning recovery control. Thus, if a failure has occurred in the exhaust gas control catalyst on the upstream side, the exhaust gas temperature detected by the first exhaust gas temperature sensor becomes lower than the high temperature determination reference temperature even during the sulfur poisoning recovery control. If such a state continues, it can be determined that a failure has occurred in the exhaust gas control catalyst on the upstream side. Accordingly, even when a failure, e.g., degradation and clogging, occurs in the exhaust gas control catalyst on the upstream side, heat degradation of the exhaust gas control catalyst on the downstream side is not promoted and reduction in fuel efficiency is not caused, since the sulfur poisoning recovery computing means functions.

In the exhaust gas control catalyst control apparatus according to the second aspect and the aspect related to the second aspect of the invention, the first catalyst and the second catalyst may configured so as to be NOx storage reduction catalysts arranged in the exhaust system of the internal combustion engine. The second catalyst may be constituted by using a filter which filters particulate in exhaust gas as a base and forming a layer of the NOx storage reduction catalyst on the filter. Thus, as the exhaust gas control catalyst, the above-mentioned structure can be employed. Accordingly, even when a failure, e.g., degradation and clogging, occurs in the exhaust gas control catalyst on the upstream side, heat degradation of the exhaust gas control catalyst, in which the layer of the NOx storage reduction catalyst is formed on the filter on the downstream side, is not promoted and reduction in fuel efficiency is not caused.

BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:

FIG. 1 is a block diagram schematically showing a structure of a vehicular diesel engine and a control apparatus in a first embodiment;

FIG. 2 is a flowchart showing a sulfur poisoning amount Sx calculating/determining routine performed by an ECU in the first embodiment;

FIG. 3 is a flowchart showing a sulfur release determination flag Fsr setting routine in the first embodiment;

FIG. 4 is a graph showing a temperature distribution in an exhaust system, for describing a process which is performed when an exhaust gas control catalyst on the upstream side is operating normally, in the first embodiment;

FIG. 5 is a graph showing a temperature distribution in the exhaust system, for describing a process which is performed when an failure has occurred in the exhaust gas control catalyst on the upstream side, in the first embodiment; and

FIG. 6 is a flowchart showing an sulfur release determination flag Fsr setting routine performed by an ECU in a second embodiment.

DETAILED DESCRIPTION OF THE PREFERRED EMBODIMENTS

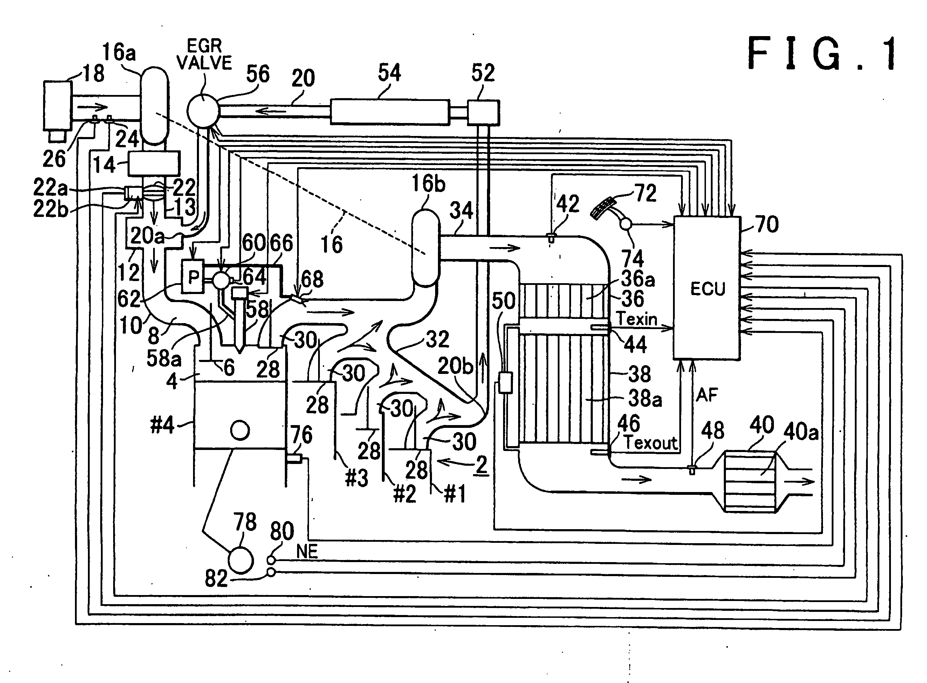

Hereafter, a first embodiment of the invention will be described with reference to accompanying drawings. FIG. 1 is a block diagram schematically showing a structure of a vehicular diesel engine and a control apparatus to which the invention is applied. Note that the invention can be applied to a lean-burn gasoline engine or the like having a catalyst structure similar to that in the embodiment.

A diesel engine 2 includes a plurality of cylinders. In the embodiment, the diesel engine 2 includes four cylinders, #1, #2, #3 and #4. A combustion chamber 4 of each of the cylinders #1, #2, #3 and #4 is coupled to a surge tank 12 via an intake port 8 opened/closed by an intake valve 6, and an intake manifold 10. The surge tank 12 is then coupled to an intercooler 14 and an outlet side of a compressor 16a of a supercharger, that is, an exhaust turbocharger 16 in the embodiment, through an intake passage 13. An inlet side of the compressor 16a is coupled to an air cleaner 18. An EGR gas supply port 20a of an exhaust gas re-circulation (hereinafter, referred to as "EGR") passage 20 opens into the surge tank 12. A throttle valve 22 is provided in the intake passage 13 connecting the surge tank 12 to the intercooler 14. An intake air amount sensor 24 and an intake air temperature sensor 26 are provided between the compressor 16a and the air cleaner 18.

The combustion chamber 4 of each of the cylinders #1, #2, #3 and #4 is coupled to an inlet side of an exhaust turbine 16b of the exhaust turbocharger 16 via an exhaust port 30 opened/closed by an exhaust valve 28, and an exhaust manifold 32. An outlet side of the exhaust turbine 16b is connected to an exhaust passage 34. The exhaust turbine 16b takes in exhaust gas from the fourth cylinder #4 side in the exhaust manifold 32.

In the exhaust passage 34, there are provided three catalytic converters 36, 38, and 40 each of which has an exhaust gas control catalyst. In the first catalytic converter 36 provided uppermost stream among the three catalytic converters, a NOx storage reduction catalyst 36a is housed. When exhaust gas is in the oxidizing atmosphere (i.e., when the air-fuel ratio is lean) while the diesel engine is operating normally, NOx is stored in the NOx storage reduction catalyst. When exhaust gas .is in the reducing atmosphere (i.e., when the air-fuel ratio is equal to or lower than the stoichiometric air-fuel ratio), the NOx stored in the NOx storage reduction catalyst 36a is released as NO, and reduced by HC and CO. NOx is thus purified.

In the second catalytic converter 38 provided between the other converters 36 and 40, a filter 38a having a wall portion formed in a monolithic structure is stored. The wall portion is configured such that exhaust gas flows through micropores formed in the wall portion. Since a layer of the NOx storage reduction catalyst is formed on the micropore surface of the filter 38a by coating, NOx is purified as described above. In addition, particulate (hereinafter, referred to as "PM") in exhaust gas is captured in the wall portion of the filter. Therefore, oxidation of PM is started by active oxygen which is generated when NOx is stored in the oxidizing atmosphere at a high temperature. Further, the entire PM is oxidized by ambient excessive oxygen. Thus, not only NOx but also PM is purified. Note that the first catalytic converter 36 and the second catalytic converter 38 are integrally formed in the embodiment.

In the third catalytic converter 40 provided lowermost stream from among the three catalytic converters, an oxidation catalyst 40a is housed, and HC and CO are oxidized and purified therein. A first air-fuel ratio sensor 42 is provided upstream from the NOx storage reduction catalyst 36a. A first exhaust gas temperature sensor 44 is provided between the NOx storage reduction catalyst 36a and the filter 38a. Between the filter 38a and the oxidation catalyst 40a, a second exhaust gas temperature sensor 46 is provided near the filter 38a, and a second air-fuel ratio sensor 48 is provided near the oxidation catalyst 40a.

Each of the first air-fuel ratio sensor 42 and the second air-fuel ratio sensor 48 detects an air-fuel ratio in exhaust gas at a position thereof based on components of the exhaust gas, and linearly outputs a voltage signal proportional to the air-fuel ratio. The first exhaust gas temperature sensor 44 and the second exhaust gas temperature sensor 46 detect an exhaust gas temperature Texin and an exhaust gas temperature Texout at a position thereof.

A pipe of a pressure difference sensor 50 is provided on each of the upstream side and the downstream side of the filter 38a. The pressure difference sensor 50 detects a pressure difference between the upstream side and the downstream side of the filter 38a, in order to detect clogging in the filter 38a.

An EGR gas inlet 20b of the EGR passage 20 opens into the exhaust manifold 32. The EGR gas inlet 20b opens on the first cylinder #1 side, that is opposite to the fourth cylinder #4 side on which the exhaust turbine 16b takes in exhaust gas.

In the EGR passage 20, an iron EGR catalyst 52 for reforming the EGR gas is provided on the EGR gas inlet 20b side. Further, an EGR cooler 54 for cooling the EGR gas is provided downstream from the iron EGR catalyst 52 in the EGR passage 20. The EGR catalyst 52 also has a function of preventing clogging in the EGR cooler 54. An EGR valve 56 is provided on the EGR gas supply port 20a side. The amount of EGR gas supplied from the EGR gas supply port 20a to the intake system can be adjusted by adjusting the opening amount of EGR valve 56.

A fuel injection valve 58, which is provided in each of the cylinders #1 to #4 and which directly injects fuel into the combustion chamber 4, is coupled to a common rail 60 via a fuel supply pipe 58a. Fuel is supplied from an electrically controlled discharge amount variable fuel pump 62 into the common rail 60, and high pressure fuel supplied from the fuel pump 62 into the common rail 60 is distributed to each fuel injection valve 58 via each fuel supply pipe 58a. A fuel pressure sensor 64 for detecting a fuel pressure is attached to the common rail 60.

Further, low pressure fuel is supplied to a supply valve 68 via a fuel supply pipe 66 from the fuel pump 62. The supply valve 68 is provided in the exhaust port 30 of the fourth cylinder #4, and supplies fuel into exhaust gas by injecting fuel to the exhaust turbine 16b side. Due to this fuel supply, a catalyst control mode, to be described later, is performed.

An electronic control unit (hereinafter, referred to as an "ECU") 70 mainly includes a digital computer provided with a CPU, ROM, RAM and the like, and a drive circuit for driving various devices. The ECU 70 reads signals from the intake air amount sensor 24, the intake air temperature sensor 26, the first air-fuel ratio sensor 42, the first exhaust gas temperature sensor 44, the second exhaust gas temperature sensor 46, the second air-fuel ratio sensor 48, the pressure difference sensor 50, an EGR vale opening amount sensor in the ECG valve 56, the fuel pressure sensor 64 and a throttle valve opening amount sensor 22a. In addition, the ECU 70 reads signals from an accelerator pedal operation amount sensor 74 for detecting an operation amount of an accelerator pedal 72, and a coolant temperature sensor 76 for detecting a temperature of a coolant for the diesel engine 2. Further, the ECU 70 reads signals from an engine rotational speed sensor 80 for detecting a rotational speed NE of a crankshaft 78, and a cylinder identifying sensor 82 for identifying a cylinder by detecting a rotational phase of the crankshaft 78 or a rotational phase of an inlet cam.

Based on the engine operation state obtained based on these signals, the ECU 70 performs control of the fuel injection timing and fuel injection amount using the fuel injection valve 58. In addition, the ECU 70 performs control of the opening amount of EGR valve 56, control of throttle valve opening amount using a motor 22b, and control of the discharge amount from the fuel pump 62, and further, PM recovery control and sulfur poisoning recovery control, to be described later. For example, EGR control is performed for adjusting a throttle valve opening amount and the EGR valve opening amount in coordination, such that an EGR rate becomes equal to a target EGR rate which is set based on an engine load and the engine rotational speed NE. Further, intake air amount feedback control is performed for adjusting the EGR valve opening amount such that an intake air amount becomes equal to a target intake air amount which is set based on the engine load and the engine rotational speed NE (the target value for one rotation of the engine). In the embodiment, the fuel injection amount is used as the engine load. However, the accelerator pedal operating amount may be used as the engine load.

A combustion mode performed by the ECU 70 includes two types of combustion mode, that are, a normal combustion mode and a low temperature combustion mode. The ECU 70 selects the combustion mode from among these two combustion modes according to the operation state. In the low temperature combustion mode, an increase in the combustion temperature is slowed by a large amount of re-circulated exhaust, and the amounts of both NOx and smoke are simultaneously reduced. In the embodiment, the low temperature combustion mode is performed mainly in a region where a low load is applied and the rotational speed is low or medium. The combustion mode other than the low temperature combustion mode is the normal combustion mode in which normal EGR control (including a case where exhaust gas re-circulation is not performed) is performed.

A catalyst control mode, in which a control process for the catalyst is performed, includes a PM recovery control mode, a sulfur poisoning recovery control mode, a NOx reduction control mode and a normal control mode. In the PM recovery mode, PM accumulated on the filter 38a in the second catalytic converter 38 is burned by increasing the temperature, as described above, decomposed into $CO_2$ and $H_2O$, and released. In this mode, the catalyst bed temperature is increased (to 600 to 700 °C, for example) by repeatedly supplying fuel from the supply valve 68 at an air-fuel ratio higher than the stoichiometric air-fuel ratio. Further, an after-fuel injection may be performed by the fuel injection valve 58.

In the sulfur poisoning recovery control mode, if sulfur poisoning occurs in the NOx storage reduction catalyst 36a and the filter 38a, and the NOx storage ability thereof is reduced, the NOx storage reduction catalyst 36a and the filter 38a are made to release the sulfur component therefrom so as to be recovered from sulfur poisoning. In this mode, the temperature increasing process is performed by repeatedly supplying fuel from the supply valve 68 and increasing the catalyst bed temperature (to 600 to 700 °C, for example). Further, the air-fuel ratio decreasing process for decreasing the air-fuel ratio to a value equal to or slightly lower than the stoichiometic air-fuel ratio is performed. In this mode, an after-fuel injection may be performed by the fuel injection valve 58.

In the NOx reduction control mode, the NOx stored in the NOx storage reduction catalyst 36a and the filter 38a is reduced to $N_2$, $CO_2$ and $H_2O$, and released. In this mode, the process for decreasing an air-fuel ratio to a value equal to or lower than the stoichiometric air-fuel ratio is performed by making the catalyst bed temperature relatively low (250 to 500°C, for example) by intermittently supplying fuel from the supply valve 68 at relatively long time intervals.

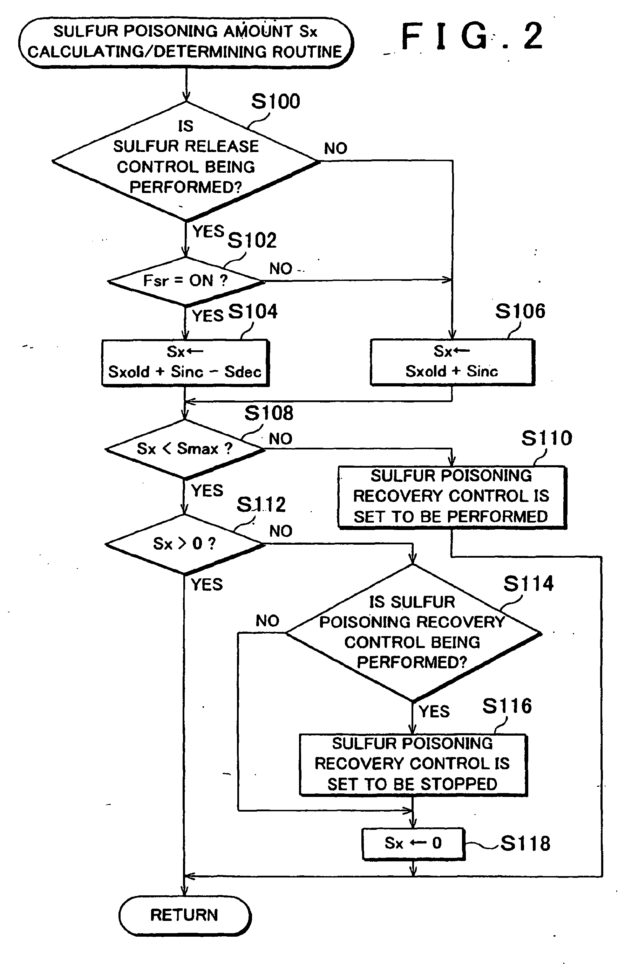

The mode other than these three catalyst control modes is the normal control mode. In the normal control mode, fuel supply from the supply valve 68 and the after-injection by the fuel injection valve 58 are not performed. The flowchart in FIG. 2 shows the sulfur poisoning amount Sx calculating/determining routine performed by the ECU 70. In the routine, the sulfur poisoning amount Sx for the NOx storage reduction catalyst on the filter 38a and the NOx storage reduction catalyst 36a is calculated, and whether a sulfur poisoning recovery control process, to be described later, is to be performed is determined. The routine is performed as an interrupt at predetermined intervals.

When the routine is started, it is initially determined in step S 100 whether sulfur release control in the sulfur poisoning recovery control is being performed. The "sulfur release control" signifies the control for making the catalyst release the sulfur component therefrom and recover from sulfur poisoning by performing the air-fuel ratio decreasing process after the catalyst bed temperature is increased by the temperature increasing process during the sulfur poisoning recovery control.

When it is determined that the sulfur poisoning recovery control itself is not being performed ("NO" in step S100), the sulfur poisoning amount Sx is calculated according to an equation "1" in step S106.

$$Sx \leftarrow Sxold + Sinc\dots[\text{Equation 1}]$$

Here, a previous value Sxold on the right-hand side is the sulfur poisoning amount Sx which is calculated in the previous control cycle. A sulfur poisoning increase amount Sinc shows an amount of sulfur component in the fuel to be supplied to the filter 38a and the NOx storage reduction catalyst 36a during one control cycle. The sulfur component amount is obtained based on a fuel injection amount Q from the fuel injection valve 58 and the engine rotational speed NE according to a map or by calculation.

Next, it is determined in step S108 whether the sulfur poisoning amount Sx is smaller than a reference value Smax. The reference value Smax signifies the maximum poisoning amount for the filter 38a and the NOx storage reduction catalyst 36a which are set to start the sulfur poisoning recovery control.

When the sulfur poisoning amount Sx is smaller than the reference value Smax (Sx < Smax) ("YES" in step S108), it is then determined in step S112 whether the sulfur poisoning amount Sx is larger than "0" (Sx > "0"). When it is determined that the sulfur poisoning amount Sx is larger than "0" (Sx > "0") ("YES" in step S112), the routine ends.

After this, when the sulfur release control is not being performed, the computation according to the equation "1" is repeatedly performed. When the sulfur poisoning amount Sx increases and becomes equal to or larger than the reference value Smax (Sx ≥ Smax) ("NO" in step S108), the sulfur poisoning recovery control is set to be performed in S110. Thus, the sulfur poisoning recovery control is performed. Then, the temperature increasing process for increasing the temperatures of the filter 38a and the NOx storage reduction catalyst 36a is performed, and the air-fuel ratio decreasing process for making the air-fuel ratio rich (decreasing the air-fuel ratio to a value equal to or slightly lower than the stoichiometric air-fuel ratio, in the embodiment) by supplying fuel from the supply valve 68 is performed.

In the next control cycle, in the case where the sulfur poisoning recovery control is being performed, the temperature increasing process is being performed and the sulfur release control by the air-fuel ratio decreasing process has not yet been performed ("NO" in step S100), the sulfur poisoning amount Sx is computed according to the equation "1", as described above. Therefore, the sulfur poisoning amount Sx has not started to decrease.

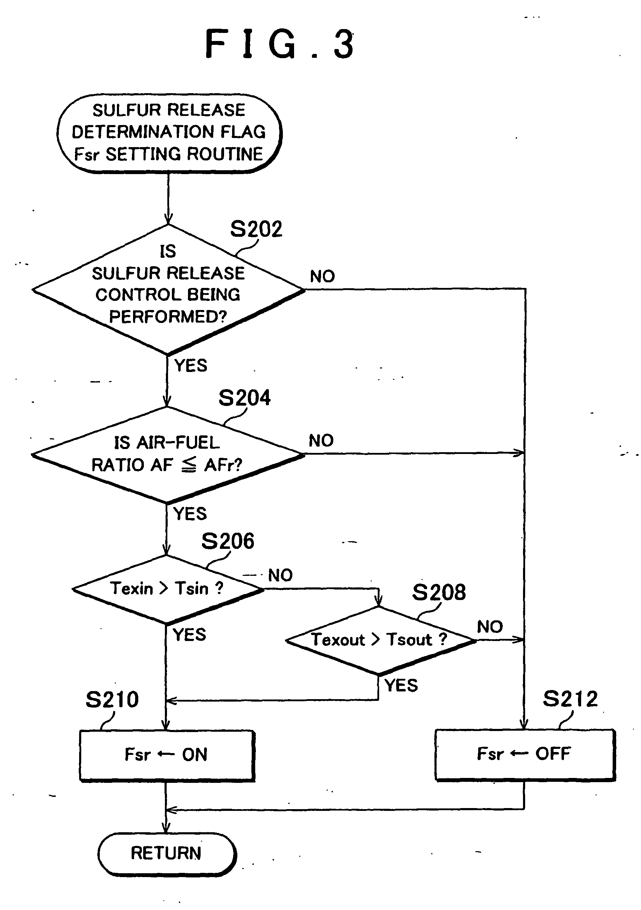

When the catalyst bed temperature of the filter 38a has reached the target catalyst bed temperature (e.g., 650°C), the sulfur release control by the air-fuel ratio decreasing process is started, and the air-fuel ratio in exhaust gas is adjusted to the target air-fuel ratio (an air-fuel ratio slightly lower than the stoichiometric air-fuel ratio, in the embodiment) by supplying fuel from the supply valve 68. When the sulfur release control is thus started ("YES" in step S100), it is then determined in step S102 whether a sulfur release determination flag Fsr is "ON". The sulfur release determination flag Fsr is a flag which is set by a sulfur release determination flag Fsr setting routine shown in FIG. 3, and shows whether the sulfur component can be actually released from the filter 38a and the NOx storage reduction catalyst 36a.

The sulfur release determination flag Fsr setting routine will be described with reference to FIG. 3. This routine is repeatedly performed at predetermined intervals. When the routine is started, it is initially determined in step S202 whether the sulfur release control is being performed. When it is determined that the sulfur release control is not being performed ("NO" in step S202), the sulfur release determination flag Fsr is set to "OFF" in step S212. The routine then ends. Accordingly, when the sulfur release control is not being performed, the sulfur release determination flag Fsr is kept "OFF" (Fsr = "OFF").

When the sulfur poisoning recovery control is performed and the sulfur release control by the air-fuel ratio decreasing process is performed in the sulfur poisoning recovery control ("YES" in step S202), it is then determined in step S204 whether an air-fuel ratio AF actually detected by the second air-fuel ratio sensor 48 is equal to or lower than a reference air-fuel ratio AFr at which the sulfur component can be released (AFr = "14.3", in the embodiment). In the sulfur release control, due to fuel supply from the supply valve 68 and an increase in the EGR rate, the air-fuel ratio decreasing process is performed so as to decrease the air-fuel ratio to a target air-fuel ratio, which is slightly lower than the stoichiometric air-fuel ratio (the air-fuel ratio ≤ "14.3", in the embodiment).

When the air-fuel ratio AF is still higher than the reference air-fuel ratio AFr (AF > AFr) even after performing the air-fuel ratio decreasing process ("NO" in step S204), the sulfur release determination flag Fsr is set to "OFF" in step S212, on the assumption that the sulfur component has not been released. The routine then ends. Therefore, while the air-fuel ratio AF is higher than reference air-fuel ratio AFr, the sulfur release determination flag is kept "OFF" (Fsr = "OFF").

When the air-fuel ratio AF becomes equal to or lower than the reference air-fuel ratio AFr (AF ≤ AFr) ("YES" in step S204), it is then determined in step S206 whether an upstream side exhaust gas temperature Texin, which is detected by the first exhaust gas temperature sensor 44 provided between the NOx storage reduction catalyst 36a and the filter 38a, is higher than a high temperature determination reference temperature Tsin. The upstream side exhaust gas temperature Texin accurately reflects the catalyst bed temperature of the NOx storage reduction catalyst 36a. The high temperature determination reference temperature Tsin is a reference temperature which shows the fact that the catalyst bed temperature of the NOx storage reduction catalyst 36a is increased to a value at which the sulfur component can be released. The high temperature determination reference temperature Tsin is the reference temperature which also shows the fact that the catalyst bed temperature of the filter 38a on the downstream side has already reached the temperature at which the sulfur component can be released or will be immediately increased to the catalyst bed temperature at which the sulfur component can be released.

When it is determined that the upstream side exhaust gas temperature Texin is equal to or lower than the high temperature determination reference temperature Tsin (Texin ≤ Tsin) ("NO" in S206), it is then determined in step S208 whether a downstream side exhaust gas temperature Texout, which is detected by the second exhaust gas temperature sensor 46 provided downstream from the filter 38a, is higher than a high temperature determination reference temperature Tsout. The downstream side exhaust gas temperature Texout accurately reflects the catalyst bed temperature of the filter 38a. The high temperature determination reference temperature Tsout is the reference temperature which also shows the fact that the catalyst bed temperature of the filter 38 has increased to a temperature at which the sulfur component can be released.

When it is determined that the downstream side exhaust gas temperature Texout is equal to or lower than the high temperature determination reference temperature Tsout (Texout ≤ Tsout) ("NO" in step S208), the sulfur release determination flag Fsr is set to "OFF" in step S212. The routine then ends. Therefore, even when the air-fuel ratio AF is equal to or lower than the reference air-fuel ratio AFr (AF ≤ AFr), the sulfur release determination flag Fsr is kept "OFF" while the upstream side exhaust gas temperature Texin is equal to or lower than the high temperature determination reference temperature (Texin ≤ Tsin) and the downstream side exhaust gas temperature is equal to or lower than the high temperature determination reference temperature (Texout ≤ Tsout).

When the air-fuel ratio is equal to or lower than the reference air-fuel ratio AFr (AF ≤ AFr) ("YES" in step S204), and the upstream side exhaust gas temperature Texin is higher than the high temperature determination reference temperature (Texin > Tsin) ("YES" in step S206), the sulfur release determination flag Fsr is set to "ON" in step S210.

When the air-fuel ratio AF is equal to or lower than the reference air-fuel ratio AFr (AF ≤ AFr) ("YES" in step S204), the upstream side exhaust gas temperature Texin is equal to or lower than the high temperature determination reference temperature Tsin (Texin ≤ Tsin) ("NO" in step S206), and the downstream side exhaust gas temperature Texout is higher than the high temperature determination reference temperature (Texout > Tsout) ("YES" in step S208), the sulfur release determination flag Fsr is set to "ON" in step S210. Namely, in the state where the air-fuel ratio AF is equal to or lower than the reference air-fuel ratio (AF ≤ AFr), when the condition that the upstream side exhaust gas temperature Texin is higher than the high temperature determination reference temperature Tsin (Texin > Tsin) or the condition that the downstream side exhaust gas temperature Texout is higher than the high temperature determination reference temperature Tsout (Texout > Tsout) is satisfied, the sulfur release determination flag is set to "ON".

Hereafter, FIG. 2 will be described again. When the sulfur release determination flag Fsr, which is set as described above, is "OFF" ("NO" in step S102), the sulfur component is not actually released from the filter 38a and the NOx storage reduction catalyst 36a. Therefore, the sulfur poisoning amount Sx increasing computation is performed according to the equation "1", in step S106. Namely, the sulfur poisoning recovery computation is not performed.

When the sulfur release determination flag Fsr is "ON" ("YES" in step S102), the sulfur component is actually released from the filter 38a and the NOx storage reduction catalyst 36a. Therefore a sulfur poisoning amount Sx decreasing computation is performed according to an equation "2" in step S104.

$$\text{Sx} \leftarrow \text{Sxold} + \text{Sinc} - \text{Sdec} \ldots [\text{Equation 2}]$$

The previous value Sxold and the sulfur poisoning increase amount Sinc on the right-hand side are as explained in the description of the equation "1". A sulfur release amount Sdec shows an amount of the sulfur component released from the filter 38a and the NOx storage reduction catalyst 36a during one control cycle. The sulfur release amount Sdec is set to a predetermined value. Since the sulfur poisoning increase amount Sinc is considerably smaller than the sulfur release amount Sdec (Sinc << Sdec), the sulfur poisoning amount Sx decreases by the computation according to the equation "2". Namely, the sulfur poisoning recovery computation is performed.

Thus, when an affirmative determination is made in step S102, the sulfur poisoning amount Sx is repeatedly decreased.

When the sulfur poisoning amount Sx becomes equal to or smaller than "0" (Sx ≤ "0") ("NO" in step S112) due to a decrease in the sulfur poisoning amount Sx, it is then determined in step S 114 whether the sulfur poisoning recovery control is being performed. In this case, since the sulfur poisoning recovery control is being performed ("YES" in step S 114), the sulfur poisoning recovery control is set to be stopped, in step S 116. The sulfur poisoning recovery control is thus stopped.

Then, the value of the sulfur poisoning amount Sx is reset to "0" in step S118, afterwhich the routine ends. In the next control cycle, the sulfur release control is not performed since the sulfur poisoning recovery control is stopped ("NO" in step S100). Accordingly, the sulfur poisoning amount Sx increasing computation according to the equation "1" is started, and the process returns to the initial state.

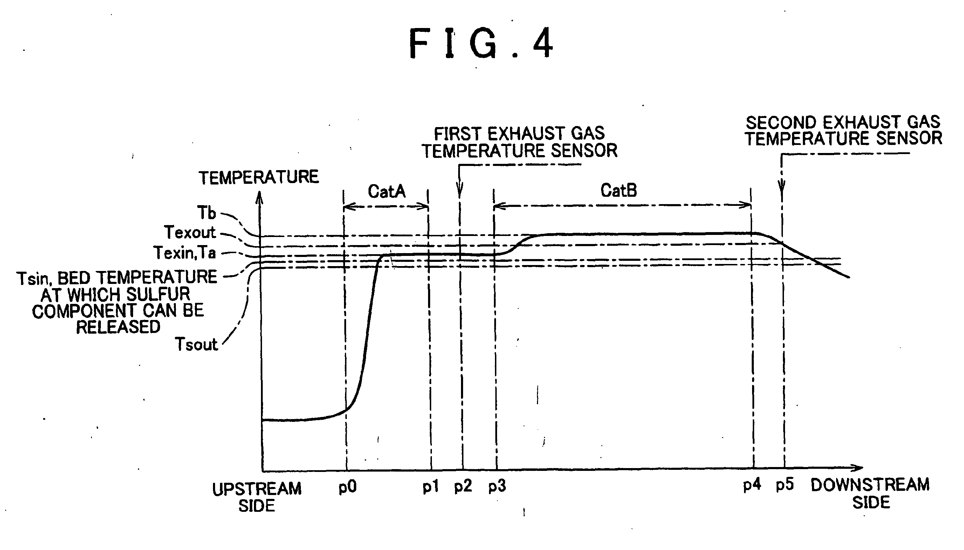

FIG. 4 shows a temperature distribution in the exhaust system when the sulfur release control is performed in the state where no failure has occurred in the NOx storage reduction catalyst 36a. In this case, the upstream side exhaust gas temperature Texin detected at a position p2 of the first exhaust gas temperature sensor 44 is approximate to a catalyst bed temperature Ta of the NOx storage reduction catalyst 36a (shown by "CatA") and a catalyst bed temperature Tb of the filter 38a (shown by "CatB"), and actually has a high correlation with the catalyst bed temperatures Ta and Tb. The downstream side exhaust gas temperature Texout detected at a position p5 of the second exhaust gas temperature sensor 46 is approximate to the catalyst bed temperature Tb of the filter 38a (CatB), and actually has a high correlation with the catalyst bed temperature Tb. Therefore, when the upstream side exhaust gas temperature Texin is higher than the high temperature determination reference temperature (Texin > Tsin), it can be determined that the catalyst bed temperature of the NOx storage reduction catalyst 36a has been increased to a value at which the sulfur component can be released. In addition, it can be determined that the catalyst bed temperature of the filter 38a has reached a value at which the sulfur component can be released or will be immediately increased to the value at which the sulfur component can be released. When it is determined that the downstream side exhaust gas temperature Texout is higher than the high temperature determination reference temperature Tsout (Texout > Tsout), it can be determined that at least the catalyst bed temperature of the filter 38a has reached the value at which the sulfur component can be released.

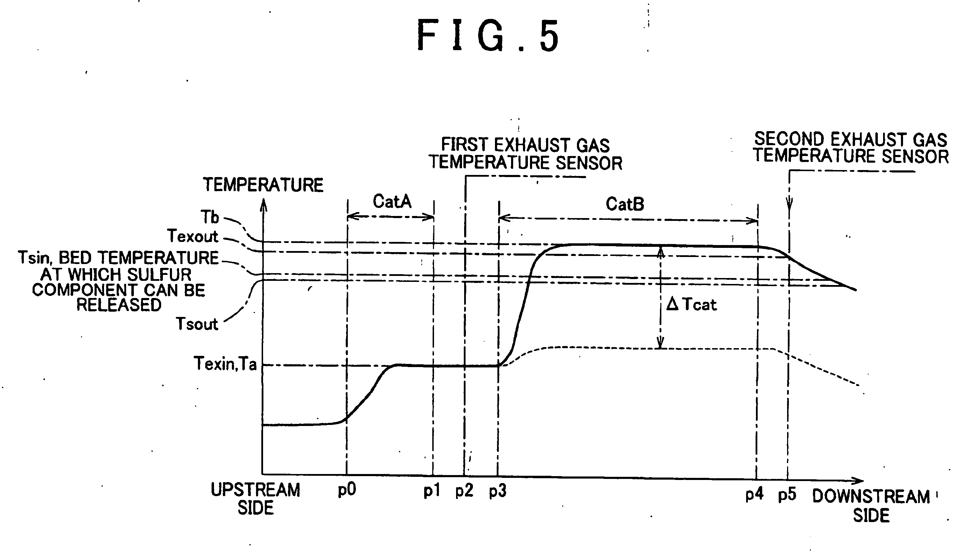

FIG. 5 shows a temperature distribution in the exhaust system when the sulfur release control is being performed in the state where a failure has occurred in the NOx storage reduction catalyst 36a due to degradation thereof. In this case, the upstream side exhaust gas temperature Texin detected at the position p2 of the first exhaust gas temperature sensor 44 is approximate to the catalyst bed temperature Ta of the NOx storage reduction catalyst 36a (CatA), and has a high correlation with the catalyst bed temperatures Ta. However, the upstream side exhaust gas temperature Texin is not approximate to the catalyst bed temperature Tb of the filter 38a (CatB), and has a low correlation with the catalyst bed temperature Tb. However, the downstream side exhaust gas temperature Texout detected at the position p5 of the second exhaust gas temperature sensor 46 is approximate to the catalyst bed temperature Tb of the filter 38a (CatB) and has a high correlation with the catalyst bed temperature Tb.

Accordingly, in the case of FIG. 4 where no failure has occurred in the NOx storage reduction catalyst 36a, at least the degree of the catalyst bed temperature Tb of the filter 38a (CatB) at the present time or immediately after the present time can be determined based on the upstream side exhaust gas temperature Texin, or the downstream side exhaust gas temperature Texout. Therefore, when the downstream side exhaust gas temperature Teout is higher than the high temperature determination reference temperature Tsout (Texout > Tsout), the equation "2" is applied, and the sulfur poisoning recovery computation is performed.

In the case of FIG. 5 where a failure has occurred in the NOx storage reduction catalyst 36a, when the degree of the catalyst bed temperature Tb of the filter 38a (CatB) is determined based on the upstream side exhaust gas temperature Texin, even if the catalyst bed temperature Tb is actually increased sufficiently as shown by a solid line, it is estimated that the catalyst bed temperature Tb is considerably low as shown by a dashed line ($\Delta$Tcat). Accordingly, not only the catalyst bed temperature of the NOx storage reduction catalyst 36a but also the catalyst bed temperature of the filter 38a is estimated to be lower than the catalyst bed temperature at which the sulfur component can be released. However, even in such a case, the downstream side exhaust gas temperature Texout is approximate to the catalyst bed temperature Tb of the filter 38a (CatB) and has a high correlation with the catalyst bed temperature Tb. Therefore, the degree of the catalyst bed temperature Tb of the filter 38a (Cat B) is estimated as shown by the solid line, and the equation "2" is applied on the assumption that the sulfur component is released. Therefore, the sulfur poisoning recovery computation is performed.

In the above-mentioned structure, the second air-fuel ratio sensor 48 corresponds to air-fuel ratio detecting means. Steps S102, S104 and S106 of the sulfur poisoning amount Sx calculating/determining routine (FIG. 2) performed by the ECU 70 and the sulfur release determination flag Fsr setting routine (FIG. 3) correspond to the process as sulfur poisoning recovery computing means.

According to the first embodiment described so far, the following effect can be obtained.

($\alpha$) When the first exhaust gas temperature sensor 44 and the second exhaust gas temperature sensor 46 are provided, the upstream side exhaust gas temperature Texin detected by the first exhaust gas temperature sensor 44 shows a temperature which accurately reflects the catalyst bed temperature of the NOx storage reduction catalyst 36a on the upstream side from among the two exhaust has control catalysts (the NOx storage reduction catalyst 36a and the filter 38a). Accordingly, when the upstream side exhaust gas temperature Texin is higher than the high temperature determination reference temperature Tsin, it can be determined that the catalyst bed temperature of the NOx storage reduction catalyst 36a on the upstream side has reached the value at which the sulfur component can be released.

Based on this, it can be determined that the catalyst bed temperature of the filter 38a on the downstream side has already reached the value at which the sulfur component can be released or will be immediately increased to the value at which the sulfur component can be released.

The downstream side exhaust gas temperature Texout detected by the second exhaust gas temperature sensor 46 accurately reflects a catalyst bed temperature of the filter 38a on the downstream side from among the two exhaust gas control catalysts. Accordingly, when the downstream side exhaust gas temperature Texout is higher than the high temperature determination reference temperature Tsout, it can be determined that at least the catalyst bed temperature of the filter 38a on the downstream side has reached the value at which the sulfur component can be released.

Accordingly, in the state where the air-fuel ratio is decreased to a value equal to or lower than the reference air-fuel ratio AFr, when at least one of the condition that the upstream side exhaust gas temperature Texin is higher than the high temperature determination reference temperature Tsin and the condition that the downstream side exhaust gas temperature Texout is higher than the high temperature determination reference temperature Tsout is satisfied, the sulfur poisoning recovery computation is performed. Thus, the degree of recovery from sulfur poisoning, that is, the sulfur poisoning amount Sx obtained according to the equation "2", can be obtained with high accuracy. Therefore, the temperature increasing process for the catalyst bed temperature of the filter 38a and the air-fuel ratio decreasing process can be appropriately performed by the sulfur poisoning recovery control. Accordingly, even when a failure, e.g., degradation and clogging, has occurred in the NOx storage reduction catalyst 36a on the upstream side, heat degradation of the filter 38a on the downstream side is not promoted, and reduction in fuel efficiency is not caused.

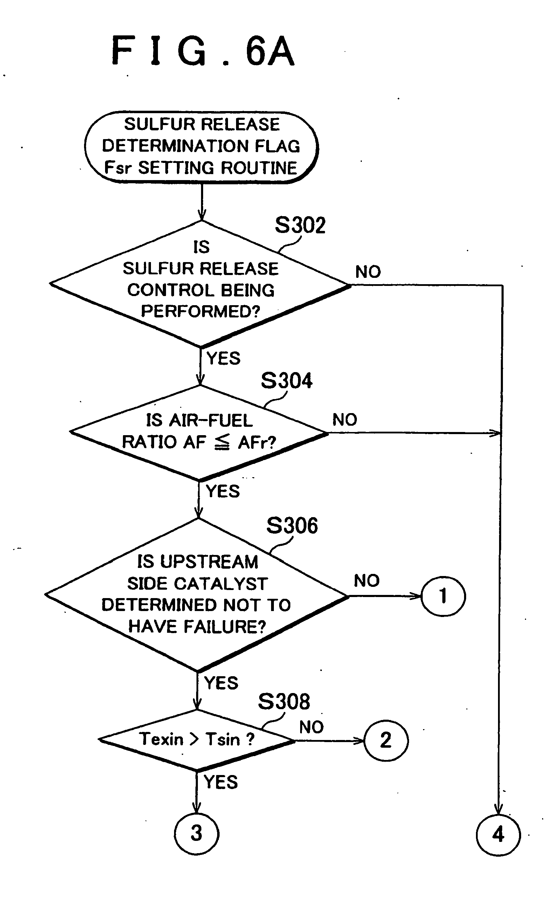

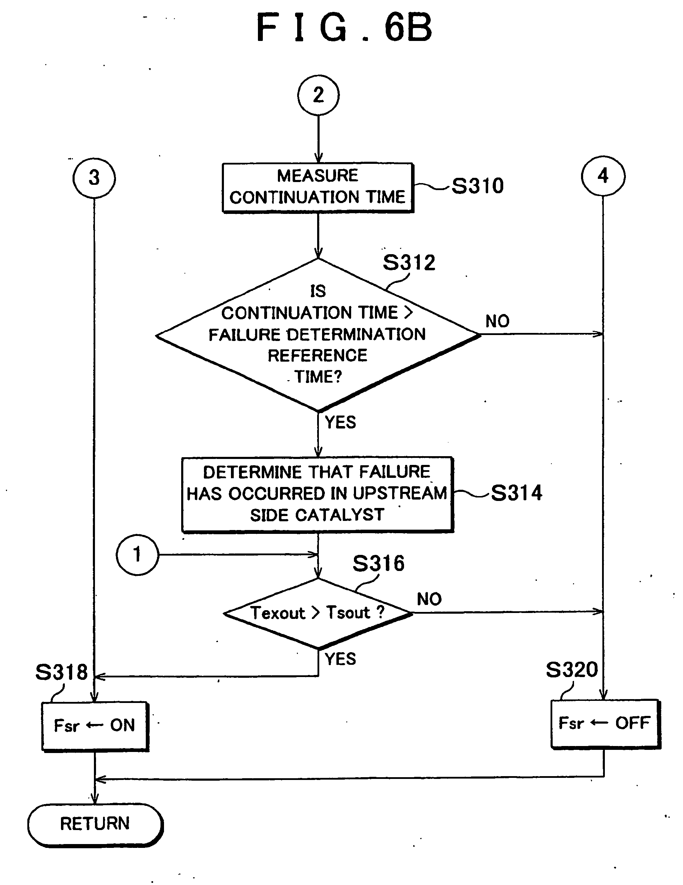

Hereafter, a second embodiment of the invention will be described. In the second embodiment, in stead of the sulfur release determination flag Fsr setting routine shown in FIG. 3, a sulfur release determination flag Fsr setting routine shown in FIG. 6 is performed. The sulfur poisoning amount Sx calculating/determining routine (FIG. 2) and the structure of hardware are the same as those in the fist embodiment. Therefore, description on the second embodiment will be made with reference FIGS. 1 and 2 as well.

The sulfur release determination flag Fsr setting routine (FIG. 6) will be described. The routine is repeatedly performed at predetermined intervals. When the routine is started, it is initially determined in step S302 whether the sulfur release control is being performed. When it is determined that the sulfur release control is not being performed ("NO" in step S302), the sulfur release determination flag Fsr is set to "OFF" in step S320. The routine then ends. Accordingly, when the sulfur release control is not being performed, the sulfur release determination flag Fsr is kept "OFF" (Fsr = "OFF").

When the sulfur poisoning recovery control is performed and the sulfur release control is performed in the sulfur poisoning recovery control ("YES" in step S302), it is then determined in step S 304 whether the air-fuel ratio AF detected by the second air-fuel ratio 48 is equal to or lower than the reference air-fuel ratio AFr at which the sulfur component can be released. The reference air-fuel ratio AFr is as explained in the description of step S204 in FIG. 3. The air-fuel ratio decreasing process in the sulfur release control is as explained in the description of step S204 in FIG. 3.

When the air-fuel ratio AF is higher than the reference air-fuel ratio AFr even after the air-fuel ratio decreasing process is performed ("NO" in step S304), the sulfur release determination flag is set to "OFF" in step S320 on the assumption that the sulfur component has not been released. The routine then ends. Therefore, while the air-fuel ratio AF is higher than the reference air-fuel ratio AFr (AF > AFr), the sulfur release determination flag Fsr is kept "OFF" (Fsr = "OFF").

When the air-fuel ratio AF becomes equal to or lower than the reference air-fuel ratio AFr (AF ≤ AFr) ("YES" in step S304), it is then determined in step S306 whether the NOx storage reduction catalyst 36a on the upstream side is determined not to have a failure. The determination as to whether a failure has occurred in the NOx storage reduction catalyst 36a will be described later.

When the NOx storage reduction catalyst 36a is determined not to have a failure ("YES" in step S306), it is then determined in step S308 whether the upstream side exhaust gas temperature Texin detected by the first exhaust gas temperature sensor 44 is higher than the high temperature determination reference temperature Tsin. The upstream side exhaust gas temperature Texin and the high temperature determination reference temperature Tsin are as explained in the description of step S206 in FIG. 3.

When it is determined that the upstream side exhaust gas temperature Texin is higher than the high temperature determination reference temperature Tsin (Texin > Tsin) ("YES" in step S308), the sulfur release determination flag Fsr is set to "ON" in step S318.

On the other hand, when it is determined that the upstream side exhaust gas temperature Texin is equal to or lower than the high temperature determination reference temperature Tsin (Texin ≤ Tsin) ("NO" in step S308), the time in which the upstream side exhaust gas temperature Texin is kept equal to or lower than the high temperature determination reference temperature Tsin (Texin ≤ Tsin) is measured in step S 310. The continuation time is measured in order to determine whether a failure has occurred in the NOx storage reduction catalyst 36a. Namely, if the upstream side exhaust gas temperature Texin is kept equal to or lower than the high temperature determination reference temperature Tsin (Texin ≤ Tsin) even when the sulfur release control is being performed after the temperature increasing process is performed in the sulfur poisoning recovery control, it can be determined that a failure has occurred in the NOx storage reduction catalyst 36a.

Next, it is determined in step S312 whether the continuation time has exceeded a failure determination reference time. When it is determined that the continuation time is equal to or shorter than the failure determination reference time (continuation time ≤ failure determination reference time) ("NO" ion step S312), the sulfur release determination flag Fsr is kept "OFF" in step S320. The routine then ends.

Then, the continuation time is repeatedly measured in step S310 and the continuation time becomes longer than the failure determination reference time ("YES" in step S312), it is determined in step S314 that a failure has occurred in the catalyst on the upstream side. Namely, it is determined that a failure has occurred in the NOx storage reduction catalyst 36a, and the NOx storage reduction catalyst 36a hardly serves as a catalyst.

Next, it is determined in step S316 whether the downstream side exhaust gas temperature Texout detected by the second exhaust gas temperature sensor 46 is higher than the high temperature determination reference temperature Tsout. The downstream side exhaust gas temperature Texout and the high temperature determination reference temperature Tsout are as explained in the description of step S208 in FIG. 3.

When it is determined that the downstream side exhaust gas temperature Texout is equal to or lower than the high temperature determination reference temperature Tsout (Texout ≤ Tsout) ("NO" in step S316), the sulfur release determination flag Fsr is set to "OFF" in step S320. The routine then ends. In the next control routine, since it has been determined that a failure has occurred in the NOx storage reduction catalyst 36 ("NO" in step S306), it is immediately determined in step S316 whether the downstream side exhaust gas temperature Texout is higher than the high temperature determination reference temperature Tsout. When it is determined that the downstream side exhaust gas temperature Texout is equal to or lower than the high temperature determination reference temperature Tsout (Texout ≤ Tsout) ("NO" in step S316), the sulfur release determination flag Fsr is set to "OFF" in step S320.

Therefore, even if the air-fuel ratio AF is equal to or lower than the reference air-fuel ratio AFr (AF ≤ AFr), when a failure has occurred in the NOx storage reduction catalyst 36a and the downstream side exhaust gas temperature Texout is equal to or lower than the high temperature determination reference temperature Tsout (Texout ≤ Tsout), the sulfur release determination flag Fsr is kept "OFF". Immediately after a determination is made in step S314 that a failure has occurred in catalyst on the upstream side, or in step S316 in the next cycle, if it is determined that the downstream side exhaust gas temperature Texout is higher than the high temperature determination reference temperature Tsout (Texout > Tsout) ("YES" in step S316), the sulfur release determination flag is set to "ON" in step S318. Since the downstream side exhaust gas temperature Texout is higher than the high temperature determination reference temperature Tsout (Texout > Tsout) ("YES" in step S316) in the next control cycle as well, the sulfur release determination flag is kept "ON" (Fsr = "ON") in step S318.

Accordingly, even if a failure has occurred in the NOx storage reduction catalyst 36a, when the air-fuel ratio AF is equal to or lower than the reference air-fuel ratio AFr (AF ≤ AFr), and the downstream side exhaust gas temperature Texout is higher than the high temperature determination reference temperature Tsout (Texout > Tsout), the sulfur component can be released from the filter 38a on the downstream side. Therefore, the sulfur release determination flag Fsr is set to "ON".

Thus, the sulfur poisoning amount Sx calculating/determining routine (FIG. 2) is performed as described above, based on whether the sulfur release determination flag Fsr is "ON" or "OFF". In the above-mentioned structure, the second air-fuel ratio sensor 48 corresponds to air-fuel ratio detecting means. Steps S102, S104 and S106 in the sulfur poisoning amount Sx calculating/determining routine (FIG. 2) performed by the ECU 70 and the sulfur release determination flag Fsr setting routine (FIG. 6) correspond to the process as sulfur poisoning recovery computing means.

According to the second embodiment described so far, the following effect can be obtained.

(β) As described in the first embodiment, when the upstream exhaust gas temperature Texin is higher than the high temperature determination reference temperature Tsin, it can be determined that the catalyst bed temperature of the NOx storage reduction catalyst 36a on the upstream side has reached the value at which the sulfur component can be released. Based on this, it can be determined that the catalyst bed temperature of the filter 38a on the downstream side has already reached the value at which the sulfur component can be released, or will immediately increase to the value at which the sulfur component can be released. When the downstream side exhaust gas temperature Texout is higher than the high temperature determination reference temperature Tsout, it can be determined that at least the catalyst bed temperature of the filter 38a on the downstream side has reached the value at which the sulfur component can be released.

Therefore, in the case where no failure has occurred in the NOx storage reduction catalyst 36a on the upstream side, the sulfur poisoning recovery computation is performed, when the upstream side exhaust gas temperature Texin is higher than the high temperature determination reference temperature Tsin in the state where the air-fuel ratio is decreased to a value equal to or lower than the reference air-fuel ratio AFr. Thus, the degree of recovery from sulfur poisoning can be obtained with high accuracy. In the embodiment, the sulfur poisoning amount Sx according to the equation "2" can be obtained with high accuracy.

In the case where a failure has occurred in the NOx storage reduction catalyst 36a on the upstream side, the sulfur poisoning recovery computation is performed when the downstream side exhaust gas temperature Texout is higher than the high temperature determination reference temperature Tsout in the state where the air-fuel ratio is decreased to a value equal to or lower than the reference air-fuel ratio AFr. Thus, the degree of recovery from sulfur poisoning can be obtained with high accuracy. In the embodiment, the sulfur poisoning amount Sx according to the equation "2" can be obtained with high accuracy.

Accordingly, the temperature increasing process for the catalyst bed temperature of the filter 38a and the air-fuel ratio decreasing process can be appropriately performed by the sulfur poisoning recovery control. As a result, heat degradation of the filter 38a on the downstream side is not promoted and reduction in fuel efficiency is not caused, even when a failure, e.g., degradation and clogging, occurs in the NOx storage reduction catalyst 36a on the upstream side.

Hereafter, other embodiments will be described. (a) In the above-mentioned embodiments, there is provided a structure including two exhaust gas control catalysts (the NOx storage reduction catalyst 36a and the filter 38a) which are subject to sulfur poisoning. However, a structure may include three or more exhaust gas control catalysts which are subject to sulfur poisoning. The above-mentioned effects can be obtained by performing the control in the above-mentioned embodiments based on the exhaust gas temperatures on the upstream side and the downstream side of at least one of the second exhaust gas control catalyst and subsequent catalysts in a direction from the upstream side to the downstream side.

(b) In the above-mentioned embodiments, each of the second exhaust gas control catalyst and subsequent catalysts in a direction from the upstream side to the downstream side has a structure in which a filter for filtering PM in exhaust gas is used as the base and the layer of the NOx storage reduction catalyst is formed on the filter. However, a catalyst having the same structure as that of the NOx storage reduction catalyst 36a on the upstream side may be used.

(c) In the first embodiment, the upstream side exhaust gas temperature Texin, which is detected by the first exhaust gas temperature sensor 44 provided upstream from the filter 38a, and the downstream side exhaust gas temperature Texout, which is detected by the second exhaust gas temperature sensor 46 provided downstream from the filter 38a, are subject to determination regardless of regardless of whether a failure has occurred in the NOx storage reduction catalyst 36a. In the second embodiment, when the NOx storage reduction catalyst 36a is operating properly, the upstream side exhaust gas temperature Texin is subject to determination. When there is a failure in the NOx storage reduction catalyst 36a, the downstream side exhaust gas temperature Texout is subject to determination.

Unlike this, the sulfur release determination flag Fsr may be set by determining whether the downstream side exhaust gas temperature Texout is higher/lower than the high temperature determination reference temperature Tsout regardless of whether a failure has occurred in the NOx storage reduction catalyst 36a. Namely, when the downstream side exhaust gas temperature Texout is higher than the high temperature determination reference temperature Tsout (Texout > Tsout) during the air-fuel ratio decreasing process, the sulfur release determination flag Fsr is set to "ON". On the other hand, when the downstream side exhaust gas temperature Texout is equal to or lower than the high temperature determination reference temperature Tsout (Texout ≤ Tsout) during the air-fuel ratio decreasing process, the sulfur release determination flag Fsr is set to "OFF".

As a result, even when a failure occurs in the NOx storage reduction catalyst 36a, heat degradation of the filter 38a is not promoted and reduction in fuel efficiency is not caused, since the catalyst bed temperature of the filter 38a can be obtained with high accuracy.

(d) In the sulfur release determination flag Fsr setting process (FIG. 6) in the second embodiment, the continuation time is measured (step S310) during the sulfur release control. However, the failure determination may be performed by starting measurement of the continuation time from the temperature increasing process performed at the beginning of the sulfur poisoning recovery control. Also, instead of performing steps S310 and S312, it may be determined in step S314 that a failure has occurred in the NOx storage reduction catalyst 36a, immediately after a negative determination is made in step S308.

## Claims

1.  An exhaust gas control catalyst control method for
    an exhaust gas control catalyst (36, 38, 40)
    which is arranged in an exhaust system of an internal combustion engine and whose exhaust control ability is reduced by sulfur poisoning,
    the exhaust gas control catalyst (36, 38, 40) including, in a direction from an upstream side to a downstream side of the exhaust system, at least a first catalyst (36a), a second catalyst (38a) and a third catalyst (40a),
    the method performing a sulfur poisoning recovery control
    in which a catalyst bed temperature increasing process and an air-fuel ratio decreasing process are performed by supplying fuel from an upstream side of the exhaust system to the exhaust gas control catalyst (36, 38, 40) when sulfur poisoning occurs,

the method being **characterised by**

detecting an upstream side exhaust gas temperature (Texin) between the first catalyst (36a) and the second catalyst (38a) which are NO$_x$ storage reduction catalysts, and

detecting a downstream side exhaust gas temperature (Texout) on a downstream side of the second catalyst (38a) and subsequent catalysts which are NO$_x$ storage reduction catalysts,

wherein

in a state where an air-fuel ratio is decreased to a value equal to or lower than a reference air-fuel ratio by the air-fuel ratio decreasing process,

when the downstream side exhaust gas temperature (Texout),

which is detected at the position downstream of at least one of the second catalyst (38a) and subsequent catalysts ,

is higher than a high temperature determination reference temperature (Tsout), sulfur poisoning recovery computation is performed.

2. The exhaust gas control catalyst control apparatus according to claim 1, **characterized in that** the reference air-fuel ratio is set to a value equal to or lower than the stoichiometric air-fuel ratio.

3. The exhaust gas control catalyst control apparatus according to either claim 1 or 2, **characterized in that** the high temperature determination reference temperature (TSout) is set to a value at which sulfur can be released from at least one of the second catalyst (38a) and subsequent catalysts in a direction from the upstream side to the downstream side.

4. An exhaust gas control catalyst control apparatus for

an exhaust gas control catalyst (36, 38, 40)

which is arranged in an exhaust system of an internal combustion engine and whose exhaust control ability is reduced by sulfur poisoning,

the exhaust gas control catalyst (36, 38, 40) including, in a direction from an upstream side to a downstream side of the exhaust system, at least a first catalyst (36a), a second catalyst (38a) and a third catalyst (40a)

the apparatus performing a sulfur poisoning recovery control

in which a catalyst bed temperature increasing process and an air-fuel ratio decreasing process are performed by supplying fuel from an upstream side of the exhaust system to the exhaust gas control catalyst (36, 38, 40) when sulfur poisoning occurs,

the apparatus being **characterised by** comprising:

a first exhaust gas temperature sensor (44)

that detects an upstream side exhaust gas temperature (Texin) at a position between the first catalyst (36a) and the second (38a), which are NO$_x$ storage reduction catalysts,

a second exhaust gas temperature sensor (46)

that detects a downstream side exhaust gas temperature (Texout) at a position downstream of the second exhaust catalyst (38a) and subsequent catalysts, which are NO$_x$ storage reduction catalysts,

air-fuel ratio detecting means (42, 48)

for detecting an exhaust gas air-fuel ratio at a position downstream from a position at which the fuel supply is performed; and

sulfur poisoning recovery computing means (70)

for performing sulfur poisoning recovery computation,

when the downstream side exhaust gas temperature (Texout),

which is detected by the exhaust gas temperature sensor (46),

is higher than a high temperature determination reference temperature (Tsout),

in a state where the air-fuel ratio detecting means (42, 48) has detected that the air-fuel ratio is decreased to a value equal to or lower than a reference air-fuel ratio.

5. The exhaust gas control catalyst control apparatus according to claim 4, **characterized in that** the reference air-fuel ratio is set to a value equal to or lower than the stoichiometric air-fuel ratio.

6. The exhaust gas control catalyst control apparatus according to either claim 4 or 5, **characterized in that** the high temperature determination reference temperature (Tsout) is set to a value at which sulfur can be released from at least one of the second catalyst (38a) and subsequent catalysts in a direction from the upstream side to the downstream side.

7. The exhaust gas control catalyst control apparatus, according to any one of claims 4 to 6, **characterized in that** the sulfur poisoning recovery computing means (70) performs sulfur poisoning recovery computation, when at least one of a condition that the exhaust gas temperature (Texin), which is detected by the first exhaust gas temperature sensor (44), is higher than the high temperature determination reference temperature (Tsout) and a condition that the exhaust gas temperature (Texout), which is detected by the second exhaust gas temperature sensor (46), is higher than the high temperature determination reference temperature (Tsout) is satisfied, in a state where the air-fuel ratio detecting means (42, 48) has detected that the air-fuel ratio is decreased to the value equal to or lower than the reference air-fuel ratio.

8. The exhaust gas control catalyst control apparatus according to claim 7, **characterized in that**, the sulfur poisoning recovery computing means (70) performs sulfur poisoning recovery computation if the exhaust gas temperature (Texin) which is detected by the first exhaust gas temperature sensor (44) is higher than the high temperature determination reference temperature (Tsout) in the state where the air-fuel ratio detecting means (42, 48) has detected that the air-fuel ratio is decreased to the value equal to or lower than the reference air-fuel ratio when no failure has occurred in the first catalyst (36a), and performs sulfur poisoning recovery computation if the exhaust gas temperature (Texout) which is detected by the second exhaust gas temperature sensor (46) is higher than the high temperature determination reference temperature (Tsout) in the state where the air-fuel ratio detecting means (42, 48) has detected the fact that the air-fuel ratio is decreased to the value equal to or lower than the reference air-fuel ratio when a failure has occurred in the first catalyst (36a).

9. The exhaust gas control catalyst control apparatus according to claim 8, **characterized in that** the sulfur poisoning recovery computing means (70) determines that a failure has occurred in the first catalyst (36a), when the exhaust gas temperature (Texin) detected by the first exhaust gas temperature sensor (44) continues to be lower than the high temperature determination reference temperature (Tsout) during the sulfur poisoning recovery control.

10. The exhaust gas control catalyst control apparatus according to any one of claims 7 to 9, **characterized in that** the first catalyst (36a) and the second catalyst (38a) are NOx storage reduction catalysts arranged in the exhaust system of the internal combustion engine, and the second catalyst (38a) is constituted by using a filter which filters particulate in exhaust gas as a base and forming a layer of the NOx storage reduction catalyst on the filter.

**Patentansprüche**

1. Abgassteuerungskatalysator-Steuerungsverfahren für
   einen Abgassteuerungskatalysator (36, 38, 40),
   der in einem Abgassystem für einen Verbrennungsmotor angeordnet ist und dessen Abgassteuerungsfähigkeit durch eine Schwefelverunreinigung vermindert ist,
   wobei der Abgassteuerungskatalysator (36, 38, 40), in einer Richtung von einer stromaufwärtigen Seite zu einer stromabwärtigen Seite des Abgassystems, zumindest einen ersten Katalysator (36a), einen zweiten Katalysator (38a) und einen dritten Katalysator (40a) beinhaltet,
   wobei das Verfahren eine Schwefelverunreinigungserholungs-Steuerung ausführt,
   bei der ein Katalysatorbetttemperatur-Erhöhungsvorgang und ein Kraftstoff-Luftverhältnis-Verringerungsvorgang ausgeführt werden, indem von der stromaufwärtigen Seite des Abgassystems dem Abgassteuerungskatalysator (36, 38, 40) Kraftstoff zugeführt wird, wenn die Schwefelverunreinigung auftritt,
   wobei das Verfahren **gekennzeichnet ist durch** ein
   Erfassen einer Abgastemperatur (Texin) auf der stromaufwärtigen Seite zwischen dem ersten Katalysator (36a) und dem zweiten Katalysator (38a), bei denen es sich um NOx-Speicherreduktionskatalysatoren handelt, und ein

Erfassen einer Abgastemperatur (Texout) auf der stromabwärtigen Seite auf einer stromabwärtigen Seite des zweiten Katalysators (38a) und sich daran anschließenden Katalysatoren, bei denen es sich um NOx-Speicher-Reduktionskatalysatoren handelt,
wobei
in einem Zustand, wo ein Kraftstoff-Luftverhältnis auf einen Wert, der kleiner oder gleich einem Referenz-Kraftstoff Luftverhältnis ist, **durch** den Kraftstoff Luftverhältnis-Verringerungsvorgang reduziert wird,
wenn die Abgastemperatur (Texout) auf der stromabwärtigen Seite,
die an der stromabwärtigen Position von zumindest dem zweiten Katalysator (38a) und den sich daran anschließenden Katalysatoren erfasst wird,
höher ist als eine Hochtemperaturbestimmungs-Referenztemperatur (Tsout), eine Schwefelverunreinigungserholungs-Berechnung ausgeführt wird.

2. Abgassteuerungskatalysator-Steuerungsvorrichtung nach Anspruch 1, **dadurch gekennzeichnet, dass** das Referenz-Kraftstoff-Luftverhältnis auf einen Wert eingestellt ist, der kleiner oder gleich dem stöchiometrischen Kraftstoff-Luftverhältnis ist.

3. Abgassteuerungskatalysator-Steuerungsvorrichtung nach Anspruch 1 oder 2, **dadurch gekennzeichnet, dass** die Hochtemperaturbestimmungs-Referenztemperatur (TSout) auf einen Wert eingestellt ist, bei dem Schwefel aus zumindest dem zweiten Katalysator (38a) und den sich daran anschließenden Katalysatoren in einer Richtung von der stromaufwärtigen Seite zu der stromabwärtigen Seite freigesetzt werden kann.

4. Abgassteuerungskatalysator-Steuerungsvorrichtung für
einen Abgassteuerungskatalysator (36, 38, 40),
der in einem Abgassystem eines Verbrennungsmotors angeordnet ist und dessen Abgassteuerungsfähigkeit durch Schwefelverunreinigung reduziert wird,
wobei der Abgassteuerungskatalysator (36, 38, 40), in einer Richtung von einer stromaufwärtigen Seite zu einer stromabwärtigen Seite des Abgassystems, zumindest einen ersten Katalysator (36a), einen zweiten Katalysator (38a) und einen dritten Katalysator (40a) beinhaltet,
wobei die Vorrichtung eine Schwefelverunreinigungserholungs-Steuerung ausführt,
bei der ein Katalysatorbetttemperatur-Erhöhungsvorgang und ein Kraftstoff-Luftverhältnis-Verringerungsvorgang ausgeführt werden, indem von einer stromaufwärtigen Seite des Abgassystems dem Abgassteuerungskatalysator (36, 38, 40) Kraftstoff zugeführt wird, wenn die Schwefelverunreinigung auftritt,
wobei die Vorrichtung **dadurch gekennzeichnet ist, dass** sie aufweist:

einen ersten Abgastemperatursensor (44),
der eine Abgastemperatur auf einer stromaufwärtigen Seite (Texin) an einer Position zwischen dem ersten Katalysator (36a) und dem zweiten Katalysator (38a) erfasst, bei denen es sich um NOx-Speicher-Reduktionskatalysatoren handelt,
einen zweiten Abgastemperatursensor (46),
der eine Abgastemperatur auf einer stromabwärtigen Seite (Texout) an einer Position stromabwärts des zweiten Abgaskatalysators (38a) und den sich daran anschließenden Katalysatoren erfasst, bei denen es sich um NOx-Speicher-Reduktionskatalysatoren handelt,
eine Kraftstoff Luftverhältnis-Erfassungseinrichtung (42, 48)
zum Erfassen eines Abgas-Kraftstoff Luftverhältnisses an einer Position stromabwärts von einer Position, an der die Kraftstoffzufuhr ausgeführt wird; und
eine Schwefelverunreinigungserholungs-Berechnungseinrichtung (70)
zum Ausführen einer Schwefelverunreinigungserholungs-Berechnung,
wenn die Abgastemperatur auf der stromabwärtigen Seite (Texout),
die durch den Abgastemperatursensor (46) erfasst wird,
höher ist als eine Hochtemperaturbestimmungs-Referenztemperatur (Tsout),
in einem Zustand, wo die Kraftstoff-Luftverhältnis-Erfassungseinrichtung (42, 48) erfasst hat, dass das Kraftstoff-Luftverhältnis auf einen Wert abgenommen hat,
der kleiner oder gleich einem Referenz-Kraftstoff-Luftverhältnis ist.

5. Abgassteuerungskatalysator-Steuerungsvorrichtung nach Anspruch 4, **dadurch gekennzeichnet, dass** das Referenz-Kraftstoff-Luftverhältnis auf einen Wert eingestellt ist, der kleiner oder gleich dem stöchiometrischen Kraftstoff-Luftverhältnis ist.

**6.** Abgassteuerungskatalysator-Steuerungsvorrichtung nach Anspruch 4 oder 5, **dadurch gekennzeichnet, dass** die Hochtemperaturbestimmungs-Referenztemperatur (Tsout) auf einen Wert eingestellt ist, bei dem Schwefel aus zumindest dem zweiten Katalysator (38a) und den sich daran anschließenden Katalysatoren in einer Richtung von der stromaufwärtigen Seite zu der stromabwärtigen Seite freigesetzt werden kann.

**7.** Abgassteuerungskatalysator-Steuerungsvorrichtung nach einem der Ansprüche 4 bis 6, **dadurch gekennzeichnet, dass** die Schwefelverunreinigungserholungs-Berechnungseinrichtung (70) eine Schwefelverunreinigungserholungs-Berechnung ausführt, wenn zumindest eine Bedingung, dass die Abgastemperatur (Texin), die durch den ersten Abgastemperatursensor (44) erfasst wird, höher ist als die Hochtemperaturbestimmungs-Referenztemperatur (Tsout), und eine Bedingung, dass die Abgastemperatur (Texout), die durch den zweiten Abgastemperatursensor (46) erfasst wird, höher ist als die Hochtemperaturbestimmungs-Referenztemperatur (Tsout), erfüllt ist, und zwar in einem Zustand, wo die Kraftstoff-Luftverhältnis-Erfassungseinrichtung (42, 48) erfasst hat, dass das Kraftstoff-Luftverhältnis auf den Wert abgenommen hat, der kleiner oder gleich dem Referenz-Kraftstoff Luftverhältnis ist.

**8.** Abgassteuerungskatalysator-Steuerungsvorrichtung nach Anspruch 7, **dadurch gekennzeichnet, dass** die Schwefelverunreinigungserholungs-Berechnungseinrichtung (70) eine Schwefelverunreinigungserholungs-Berechnung ausführt, wenn die Abgastemperatur (Texin), die durch den ersten Abgastemperatursensor (44) erfasst wird, höher ist als die Hochtemperaturbestimmungs-Referenztemperatur (Tsout), und zwar in dem Zustand, wo die Kraftstoff-Luftverhältnis-Erfassungseinrichtung (42, 48) erfasst hat, dass das Kraftstoff-Luftverhältnis auf den Wert abgenommen hat, der kleiner oder gleich dem Referenz-Kraftstoff-Luftverhältnis ist, wenn in dem ersten Katalysator (36a) keine Störung eingetreten ist, und eine Schwefelverunreinigungserholungs-Berechnung ausführt, wenn die Abgastemperatur (Texout), die durch den zweiten Abgastemperatursensor (46) erfasst wird, höher ist als die Hochtemperaturbestimmungs-Referenztemperatur (Tsout) in dem Zustand, wo die Kraftstoff-Luftverhältnis-Erfassungseinrichtung (42, 48) die Tatsache erfasst hat, dass das Kraftstoff-Luftverhältnis auf den Wert abgenommen hat, der kleiner oder gleich dem Referenz-Kraftstoff-Luftverhältnis ist, wenn eine Störung in dem ersten Katalysator (36a) eingetreten ist.

**9.** Abgassteuerungskatalysator-Steuerungsvorrichtung nach Anspruch 8, **dadurch gekennzeichnet, dass** die Schwefelverunreinigungserholungs-Berechnungseinrichtung (70) bestimmt, dass eine Störung in dem ersten Katalysator (36a) eingetreten ist, wenn die Abgastemperatur (Texin), die durch den ersten Abgastemperatursensor (44) erfasst wird, weiterhin niedriger ist als die hohe Temperaturbestimmungs-Referenztemperatur (Tsout) während der Schwefelverunreinigungserholungs-Steuerung.

**10.** Abgassteuerungskatalysator-Steuerungsvorrichtung nach einem der Ansprüche 7 bis 9, **dadurch gekennzeichnet, dass** der erste Katalysator (36a) und der zweite Katalysator (38a) NOx-Speicher-Reduktionskatalysatoren sind, die in dem Abgassystem des Verbrennungsmotors angeordnet ist, und der zweite Katalysator (38a) durch Verwenden eines Filters, der Partikel in dem Abgas filtert, als Basis und Ausbilden einer Schicht des NOx-Speicher-Reduktionskatalysators auf dem Filter konstruiert ist.

**Revendications**

**1.** Procédé de commande de pot catalytique de maîtrise des gaz d'échappement pour un pot catalytique (36, 38, 40) de maîtrise des gaz d'échappement qui est agencé dans un système d'échappement d'un moteur à combustion interne et dont l'aptitude à maîtriser l'échappement est réduite par empoisonnement par le soufre,
le pot catalytique (36, 38, 40) de maîtrise des gaz d'échappement incluant, dans le sens du côté amont vers le côté aval du système d'échappement, au moins un premier pot catalytique (36a), un deuxième pot catalytique (38a) et un troisième pot catalytique (40a),
le procédé effectuant une commande de résorption de l'empoisonnement par le soufre dans laquelle un processus d'augmentation de température de lit catalytique et un processus de diminution de rapport air-carburant sont mis en oeuvre par délivrance de carburant, depuis le côté amont du système d'échappement, au pot catalytique (36, 38, 40) de maîtrise des gaz d'échappement lorsqu'un empoisonnement par le soufre se produit,
le procédé étant **caractérisé :**

**par** la détection d'une température (Texin) de gaz d'échappement de côté amont entre le premier pot catalytique (36a) et le deuxième pot catalytique (38a) qui sont des pots catalytiques de stockage-réduction de NOx; et
par la détection d'une température (Texout) de gaz d'échappement de côté aval du côté aval du deuxième pot catalytique (38a) et des pots catalytiques qui suivent qui sont des pots catalytiques de stockage-réduction de NOx,

dans lequel on effectue un calcul de résorption d'empoisonnement par le soufre, dans un état où le rapport air-carburant a diminué jusqu'à une valeur égale ou inférieure à un rapport air-carburant de référence par le processus de diminution de rapport air-carburant, lorsque la température (Texout) de gaz d'échappement de côté aval, qui est détectée à la position en aval d'au moins l'un du deuxième pot catalytique (38a) et des pots catalytiques qui suivent, est plus élevée qu'une température (Tsout) de référence de détermination de haute température.

2. Procédé de commande de pot catalytique de maîtrise des gaz d'échappement selon la revendication 1, **caractérisé en ce que** le rapport air-carburant de référence est fixé une valeur égale ou inférieure au rapport air-carburant stoechiométrique.

3. Procédé de commande de pot catalytique de maîtrise des gaz d'échappement selon l'une ou l'autre de la revendication 1 ou 2, **caractérisé en ce que** la température (TSout) de référence de détermination de haute température est fixée une valeur à laquelle du soufre peut être libéré à partir d'au moins l'un du deuxième pot catalytique (38a) et des pots catalytiques qui suivent dans le sens du côté amont vers le côté aval.

4. Équipement de commande de pot catalytique de maîtrise des gaz d'échappement pour un pot catalytique (36, 38, 40) de maîtrise des gaz d'échappement qui est agencé dans un système d'échappement d'un moteur à combustion interne et dont l'aptitude à maîtriser l'échappement est réduite par empoisonnement par le soufre,
le pot catalytique (36, 38, 40) de maîtrise des gaz d'échappement incluant, dans le sens du côté amont vers le côté aval du système d'échappement, au moins un premier pot catalytique (36a), un deuxième pot catalytique (38a) et un troisième pot catalytique (40a),
l'équipement effectuant une commande de résorption de l'empoisonnement par le soufre dans laquelle un processus d'augmentation de température de lit catalytique et un processus de diminution de rapport air-carburant sont mis en oeuvre par délivrance de carburant, depuis le côté amont du système d'échappement, au pot catalytique (36, 38, 40) de maîtrise des gaz d'échappement lorsqu'un empoisonnement par le soufre se produit,
l'équipement étant **caractérisé en ce qu'**il comprend:

un premier capteur (44) de température de gaz d'échappement qui détecte une température (Texin) de gaz d'échappement de côté amont à une position entre le premier pot catalytique (36a) et le deuxième pot catalytique (38a) qui sont des pots catalytiques de stockage-réduction de NOx;
un second capteur (46) de température de gaz d'échappement qui détecte une température (Texout) de gaz d'échappement de côté aval à une position en aval du deuxième pot catalytique (38a) et des pots catalytiques qui suivent qui sont des pots catalytiques de stockage-réduction de NOx;
un moyen (42, 48) de détection de rapport air-carburant destiné à détecter un rapport air-carburant de gaz d'échappement à une position en aval d'une position à laquelle est effectuée la délivrance de carburant ; et
un moyen (70) de calcul de résorption d'empoisonnement par le soufre destiné à effectuer un calcul de résorption d'empoisonnement par le soufre, lorsque la température (Texout) de gaz d'échappement de côté aval, qui est détectée par le capteur (46) de température de gaz d'échappement, est plus élevée qu'une température (Tsout) de référence de détermination de haute température, dans un état où le moyen (42, 48) de détection de rapport air-carburant a détecté que le rapport air-carburant a diminué jusqu'à une valeur égale ou inférieure à un rapport air-carburant de référence.

5. Équipement de commande de pot catalytique de maîtrise des gaz d'échappement selon la revendication 4, **caractérisé en ce que** le rapport air-carburant de référence est fixé une valeur égale ou inférieure au rapport air-carburant stoechiométrique.

6. Équipement de commande de pot catalytique de maîtrise des gaz d'échappement selon l'une ou l'autre de la revendication 4 ou 5, **caractérisé en ce que** la température (Tsout) de référence de détermination de haute température est fixée une valeur à laquelle du soufre peut être libéré à partir d'au moins l'un du deuxième pot catalytique (38a) et des pots catalytiques qui suivent dans le sens du côté amont vers le côté aval.

7. Équipement de commande de pot catalytique de maîtrise des gaz d'échappement selon l'une quelconque des revendications 4 à 6, **caractérisé en ce que** le moyen (70) de calcul de résorption d'empoisonnement par le soufre effectue un calcul de résorption d'empoisonnement par le soufre, lorsque est satisfaite au moins l'une de la condition que la température (Texin) de gaz d'échappement, qui est détectée par le premier capteur (44) de température de gaz d'échappement, soit plus élevée que la température (Tsout) de référence de détermination de haute température et de la condition que la température (Texout) de gaz d'échappement, qui est détectée par le second capteur (46) de température de gaz d'échappement, soit plus élevée que la température (Tsout) de référence de détermination de haute température, dans l'état où le moyen (42, 48) de détection de rapport air-carburant a détecté que le rapport air-carburant a diminué jusqu'à une valeur égale ou inférieure au rapport air-carburant de référence.

8. Équipement de commande de pot catalytique de maîtrise des gaz d'échappement selon la revendication 7, **caractérisé en ce que** le moyen (70) de calcul de résorption d'empoisonnement par le soufre effectue un calcul de résorption d'empoisonnement par le soufre si la température (Texin) de gaz d'échappement, qui est détectée par le premier capteur (44) de température de gaz d'échappement est plus élevée que la température (Tsout) de référence de détermination de haute température dans l'état où le moyen (42, 48) de détection de rapport air-carburant a détecté que le rapport air-carburant a diminué jusqu'à une valeur égale ou inférieure au rapport air-carburant de référence lorsque aucune défaillance ne s'est produite dans le premier pot catalytique (36a), et effectue un calcul de résorption d'empoisonnement par le soufre si la température (Texout) de gaz d'échappement, qui est détectée par le second capteur (46) de température de gaz d'échappement est plus élevée que la température (Tsout) de référence de détermination de haute température dans l'état où le moyen (42, 48) de détection de rapport air-carburant a détecté le fait que le rapport air-carburant a diminué jusqu'à une valeur égale ou inférieure au rapport air-carburant de référence lorsqu'une défaillance s'est produite dans le premier pot catalytique (36a).

9. Équipement de commande de pot catalytique de maîtrise des gaz d'échappement selon la revendication 8, **caractérisé en ce que** le moyen (70) de calcul de résorption d'empoisonnement par le soufre détermine qu'une défaillance s'est produite dans le premier pot catalytique (36a), lorsque la température (Texin) de gaz d'échappement détectée par le premier capteur (44) de température de gaz d'échappement continue à être inférieure à la température (Tsout) de référence de détermination de haute température durant la commande de résorption d'empoisonnement par le soufre.

10. Équipement de commande de pot catalytique de maîtrise des gaz d'échappement selon l'une quelconque des revendications 7 à 9, **caractérisé en ce que** le premier pot catalytique (36a) et le deuxième pot catalytique (38a) sont des pots catalytiques de stockage-réduction de NOx agencés dans le système d'échappement du moteur à combustion interne, et **en ce que** le deuxième pot catalytique (38a) est constitué par l'utilisation d'un filtre qui, comme base, filtre des particules dans les gaz d'échappement et par la formation d'une couche du catalyseur de stockage-réduction de NOx sur le filtre.

# FIG.1

EP 1 515 030 B1

# FIG. 2

SULFUR POISONING AMOUNT Sx
CALCULATING/DETERMINING ROUTINE

S100
IS
SULFUR RELEASE
CONTROL BEING
PERFORMED?
— NO

YES S102

Fsr = ON ? — NO

YES S104

S106

Sx ←
Sxold + Sinc − Sdec

Sx ←
Sxold + Sinc

S108

Sx < Smax ? — NO

S110

SULFUR POISONING
RECOVERY CONTROL IS
SET TO BE PERFORMED

YES S112

Sx > 0 ? — NO

YES

S114
IS SULFUR
POISONING RECOVERY
CONTROL BEING
PERFORMED?
NO

YES S116

SULFUR POISONING
RECOVERY CONTROL IS
SET TO BE STOPPED

Sx ← 0 — S118

RETURN

# FIG.3

```
        ┌─────────────────────┐
        │   SULFUR RELEASE     │
        │ DETERMINATION FLAG   │
        │ Fsr SETTING ROUTINE  │
        └─────────────────────┘
                  │
                  ▼        S202
              ╱─────────╲
             ╱    IS      ╲
            ╱ SULFUR RELEASE╲   NO
           ╱ CONTROL BEING   ╲─────────────┐
            ╲  PERFORMED?    ╱              │
             ╲─────────────╱               │
                  │ YES                     │
                  ▼        S204             │
              ╱─────────╲                   │
             ╱ IS AIR-FUEL╲   NO            │
            ╱ RATIO AF ≦ AFr?╲──────────────┤
             ╲─────────────╱                │
                  │ YES                      │
                  ▼        S206              │
              ╱─────────╲   NO               │
             ╱Texin > Tsin?╲───────┐         │
              ╲───────────╱        │         │
                  │ YES            ▼   S208   │
                  │           ╱─────────╲  NO │
                  │          ╱Texout > Tsout?╲─┤
                  │           ╲───────────╱   │
                  │                │ YES       │
      S210        │◄───────────────┘       S212│
       ┌──────────────┐         ┌──────────────┐
       │  Fsr ← ON    │         │  Fsr ← OFF   │
       └──────────────┘         └──────────────┘
                  │                      │
                  ▼◄─────────────────────┘
            ┌──────────┐
            │  RETURN  │
            └──────────┘
```

# FIG. 4

FIRST EXHAUST GAS
TEMPERATURE SENSOR

SECOND EXHAUST GAS
TEMPERATURE SENSOR

TEMPERATURE

CatA

CatB

Tb

Texout

Texin, Ta

Tsin, BED TEMPERATURE
AT WHICH SULFUR
COMPONENT CAN BE
RELEASED

Tsout

UPSTREAM
SIDE

p0    p1 p2 p3                    p4 p5   DOWNSTREAM
SIDE

# FIG.5

FIRST EXHAUST GAS TEMPERATURE SENSOR

SECOND EXHAUST GAS TEMPERATURE SENSOR

TEMPERATURE

Tb
Texout
Tsin, BED TEMPERATURE AT WHICH SULFUR COMPONENT CAN BE RELEASED
Tsout

Texin,Ta

CatA

CatB

$\Delta$Tcat

UPSTREAM SIDE

p0  p1 p2 p3

p4 p5 DOWNSTREAM SIDE

EP 1 515 030 B1

# F I G . 6A

# FIG. 6B

② → MEASURE CONTINUATION TIME — S310

S312

IS CONTINUATION TIME > FAILURE DETERMINATION REFERENCE TIME?  — NO → ④

YES ↓

DETERMINE THAT FAILURE HAS OCCURRED IN UPSTREAM SIDE CATALYST — S314

① →

S316

Texout > Tsout ? — NO →

YES ↓

③

S318
Fsr ← ON

S320
Fsr ← OFF

RETURN

**EP 1 515 030 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002122019 A
- EP 0893154 A2
- EP 0892158 A2
- EP 1154131 A2
- DE 4100397 A1
- EP 1176298 A2
- EP 1106798 A1